# EUROPÄISCHE PATENTSCHRIFT

(11) **EP 3 507 182 B1**
(45) Veröffentlichungstag und Bekanntmachung des Hinweises auf die Patenterteilung: **26.05.2021**
(21) Anmeldenummer: 17742708.5
(22) Anmeldetag: 14.07.2017
(51) Int. Cl.: B62M 6/55, B62M 11/06, B62M 11/14

(54) **ANTRIEBSANORDNUNG UND FAHRZEUG**
DRIVE ASSEMBLY AND VEHICLE
SYSTÈME D'ENTRAÎNEMENT ET VÉHICULE

(30) Priorität: 01.09.2016 DE 102016216557
(43) Veröffentlichungstag der Anmeldung: 10.07.2019
(60) Teilanmeldung: 21152460.8
(73) Patentinhaber: Robert Bosch GmbH, 70442 Stuttgart (DE)
(72) Erfinder: HINTERKAUSEN, Markus, 71696 Moeglingen (DE); KIMMICH, Peter, 71144 Steinenbronn (DE)
(86) Internationale Anmeldenummer: PCT/EP2017/067797
(87) Internationale Veröffentlichungsnummer: WO 2018/041460

(56) Entgegenhaltungen:
- EP-A1- 3 028 934
- DE-A1-102008 064 514
- DE-A1-102010 051 727
- DE-A1-102011 106 107

## Beschreibung

### Stand der Technik

Die vorliegende Erfindung betrifft eine Antriebsanordnung und ein Fahrzeug. Die vorliegende Erfindung betrifft insbesondere eine Antriebsanordnung eines mit Muskelkraft und/oder - gegebenenfalls zusätzlich - mit Motorkraft antreibbaren Fahrzeuges, eines Elektrofahrrades, eBikes oder Pedelecs sowie ein mit Muskelkraft und/oder - gegebenenfalls zusätzlich - mit Motorkraft antreibbares Fahrzeug, ein Elektrofahrrad, eBike oder Pedelec als solches.

Oft werden Fahrräder, Elektrofahrräder und dergleichen am angetriebenen Hinterrad mit einer Ketten- oder Nabenschaltung ausgebildet. Alternativ dazu können auch Tretlagerantriebe mit einem integrierten Schaltgetriebe vorgesehen werden.

Problematisch ist bei bekannten Antriebsanordnungen mit am Tretlager angeordneten Schaltgetrieben deren gesteigerte Größe und/oder ihr mangelnder Wirkungsgrad. Dies betrifft insbesondere am Tretlagerantrieb ausgebildete Reibringgetriebe, Schaltgetriebe mit Hohlwellenmotor oder dergleichen. Auch ist ein Mangel an Lastschaltfähigkeit, Zugkraftunterbrechungsfreiheit und das Auftreten von Leerwegen bei bekannten Antriebsanordnungen nachteilig.

Die Schrift DE 10 2008 064 514 A1 offenbart eine Getriebeeinheit für ein mit Muskelkraft angetriebenes Fahrrad. Ferner umfasst die Getriebeeinheit ein erstes und zweites Teilgetriebe.

Die Schrift DE 10 2010 051 727 A1 offenbart eine Antriebseinheit für ein mit Muskelkraft angetriebenes Fahrzeug, umfassend eine Getriebeeinheit mit einem ersten Teilgetriebe und einem zweiten Teilgetriebe.

### Offenbarung der Erfindung

Die erfindungsgemäße Antriebsanordnung mit den Merkmalen des Anspruchs 1 weist demgegenüber den Vorteil auf, dass bei vergleichsweise kleinem Bauraum im Bereich des Tretlagers die Drehmomentübertragung mit einem vergleichsweise hohen Wirkungsgrad, das heißt bei reduzierten Verlusten, und darüber hinaus auch unter Last und somit ohne Unterbrechung der Zugkraft bei besonders geringen oder gar verschwindenden Leerwegen erfolgen kann. Dies wird erfindungsgemäß mit den Merkmalen des unabhängigen Anspruches 1 dadurch erreicht, dass eine Antriebsanordnung geschaffen wird für ein mit Muskelkraft und/oder - insbesondere zusätzlich - mit Motorkraft antreibbares Fahrzeug, insbesondere für ein Elektrofahrrad, eBike, Pedelec oder dergleichen, mit einer um eine Drehachse drehbaren Kurbelwelle zum Aufnehmen eines ersten und insbesondere mit Muskelkraft erzeugten Drehmomentes und mit einer Übertragungseinrichtung, welche zum Übertragen des ersten Drehmomentes von der Kurbelwelle an ein mit einem Antriebsrad des Fahrzeuges koppelbares Abtriebselement und mittels eines - insbesondere automatisch - schaltbaren mehrstufigen Stirnradgetriebes zu einer variablen Übersetzung ausgebildet ist. Erfindungsgemäß weist die das Stirnradgetriebe, welches auch als Stirnradschaltgetriebe bezeichnet wird, ein erstes Stirnradschaltgetriebe und ein davon getrenntes zweites Stirnradschaltgetriebe auf. Das erste Stirnradschaltgetriebe und das zweite Stirnradschaltgetriebe weisen einen gemeinsamen Getriebeausgang zum koppelbaren Abtriebselement auf. Das erste Stirnradschaltgetriebe und das zweite Stirnradschaltgetriebe sind erfindungsgemäß wechselseitig und alternativ in den Leistungs- und Drehmomentenfluss der Übertragungseinrichtung koppelbar.

Die Unteransprüche zeigen bevorzugte Weiterbildungen der Erfindung.

Bei einer vorteilhaften Weiterbildung der erfindungsgemäßen Antriebsanordnung ist zum wechselseitigen und alternativen Koppeln des ersten Stirnradschaltgetriebes und des zweiten Stirnradschaltgetriebes in den Leistungs- und Drehmomentenfluss der Übertragungseinrichtung eine erste Koppeleinrichtung dem ersten Stirnradschaltgetriebe zugeordnet und eine zweite Koppeleinrichtung dem zweiten Stirnradschaltgetriebe zugeordnet ausgebildet, insbesondere als Teil der Übertragungseinrichtung.

Dabei können die erste Koppeleinrichtung und die zweite Koppeleinrichtung unabhängig voneinander betätigbar und zumindest in einen ersten oder gekoppelten Zustand und einen zweiten oder entkoppelten Zustand versetzbar sein.

Ferner ist dabei im gekoppelten Zustand einer jeweiligen Koppeleinrichtung das jeweils zugeordnete Stirnradschaltgetriebe in den Leistungs- und
Drehmomentenfluss der Übertragungseinrichtung eingekoppelt und im entkoppelten Zustand der jeweiligen Koppeleinrichtung das jeweils zugeordnete Stirnradschaltgetriebe vom Leistungs- und Drehmomentenfluss der Übertragungseinrichtung entkoppelt.

Es bieten sich unterschiedliche Anordnungen der jeweiligen Koppeleinrichtungen in Bezug auf den Leistungs- und Drehmomentenfluss der Übertragungseinrichtung und insbesondere in Relation zum Abtriebselement des zu Grunde liegenden Fahrzeugs an.

So ist es bei einer vorteilhaften Weiterbildung der erfindungsgemäßen Antriebsanordnung vorgesehen, dass eine jeweilige Koppeleinrichtung in Bezug auf den Leistungs- und Drehmomentenfluss der Übertragungseinrichtung in der Übertragungseinrichtung eingangsseitig und vom Abtriebselement abgewandt oder ausgangsseitig und dem Abtriebselement zugewandt angeordnet ist.

Die tatsächliche Kopplung der Teilgetriebe des Stirnradschaltgetriebes, nämlich des ersten Stirnradschaltgetriebes und des zweiten Stirnradschaltgetriebes, zur Ausbildung der variablen Umsetzung der Übertragungseinrichtung kann durch verschiedene Maßnahmen realisiert werden.

So ist es gemäß einer bevorzugten Ausführungsform der erfindungsgemäßen Antriebsanordnung vorgesehen, dass eine jeweilige Koppeleinrichtung ein Planetengetriebe oder einen Teil eines Planetengetriebes und Mittel aufweist, ein Sonnenrad des jeweiligen Planetengetriebes oder Teils eines Planetengetriebes gemäß einem gekoppelten Zustand der Koppeleinrichtung zur Leistungs- und Drehmomentenübertragung drehfest zu sperren, insbesondere in Bezug auf ein Gehäuse der Antriebsanordnung, oder gemäß einem entkoppelten Zustand der Koppeleinrichtung ohne Leistungs- und Drehmomentenübertragung für ein freies Mitdrehen freizugeben.

Dabei kann es von Vorteil sein, wenn eine jeweilige Koppeleinrichtung zum gesteuerten Sperren und Freigeben eines Sonnenrads eines zu Grunde liegenden Planetengetriebes ein mit dem jeweiligen Sonnenrad drehfest gekoppeltes Mitnehmerelement aufweist.

Bei einer besonders zuverlässigen Weiterbildung der erfindungsgemäßen Antriebsanordnung ist das Mitnehmerelement jeweils an einem oder als ein radial außen liegender oder äußerster Abschnitt eines mit dem jeweiligen Sonnenrad drehfest gekoppelten Schaltfingers ausgebildet.

Auf diese Weise kann die Struktur des Mitnehmerelements unabhängig von der Kopplung an das Sonnenrad in geeigneter Weise ausgestaltet werden, um eine Kopplung bzw. Freigabe eines Sonnenrades besonders zuverlässig auszuführen.

Bei einer anderen vorteilhaften Ausgestaltungsform der erfindungsgemäßen Antriebsanordnung wird ein besonders zuverlässige Sperrung bzw. Freigabe eines Sonnenrades dadurch ermöglicht, dass diese über einen Stellantrieb durchführbar sind, insbesondere mittels einer in Bezug auf die Drehachse der Kurbelwelle und/oder der Sonnenräder radial beabstandeten und gesteuert achsenparallel positionierbaren Schaltkulisse mit einer Mehrzahl von Anschlagselementen für die Mitnehmerelemente.

Zusätzlich und alternativ können im Zusammenhang mit der Ausgestaltung der ersten und zweiten Koppeleinrichtungen weitere Maßnahmen ergriffen werden.

So lassen sich die wechselseitige und alternative Kopplung der ersten und zweiten Stirnradschaltgetriebe in den Leistungs- und Drehmomentenfluss der Übertragungseinrichtung mit besonders einfachen Mitteln realisieren, wenn gemäß einer anderen Weiterbildung der erfindungsgemäßen Antriebsanordnung eine jeweilige Koppeleinrichtung eine Kupplung aufweist oder als solche ausgebildet ist, insbesondere nach Art einer Reibkupplung oder einer Bremse, und/oder im Zusammenwirken mit einem Aktuator zur gesteuerten Betätigung der jeweiligen Kupplung, insbesondere zum Sperren oder Freigeben eines jeweiligen Sonnenrads eines zu Grunde liegenden Planetengetriebes.

Die vorliegende Erfindung lässt sich nicht nur bei rein mit Muskelkraft betriebenen Fahrzeugen, z.B. bei klassischen Fahrrädern, anwenden, sondern insbesondere bei Elektrofahrrädern, eBikes, Pedelecs oder dergleichen, wie dies eingangs bereits erwähnt wurde.

Bei einer bevorzugten Ausführungsform der erfindungsgemäßen Antriebsanordnung ist es daher vorgesehen, dass ein elektrischer Antrieb zum Erzeugen eines Motordrehmoments ausgebildet ist und dass der elektrische Antrieb zum Übertragen des Motordrehmomentes über das Stirnradschaltgetriebe steuerbar an das Abtriebselement koppelbar ist.

Dabei können die Ankopplung des elektrischen Antriebes und somit die Übertragung des Motordrehmomentes von der Motorwelle auf das Stirnradgetriebe in verschiedener Weise realisiert sein, z.B. mit oder ohne Beteiligung einer für die Aufnahme und Übertragung eines mit Muskelkraft erzeugten Drehmomentes ausgebildeten Kurbelwelle.

Bei einer bevorzugten Ausgestaltungsform der erfindungsgemäßen Antriebsanordnung ist es dazu vorgesehen, dass zwischen dem elektrischen Antrieb und dem Stirnradschaltgetriebe ein Motorreduziergetriebe in Form eines mehrstufigen Stirnradgetriebes ausgebildet ist.

Ein radial besonders kompakter Aufbau ergibt sich, wenn gemäß einer alternativen Ausgestaltungsform der erfindungsgemäßen Antriebsanordnung zwischen dem elektrischen Antrieb und dem Stirnradschaltgetriebe ein Motorreduziergetriebe in Form eines Evoloidgetriebes ausgebildet ist. Dieses kann innen- oder außenverzahnt ausgebildet sein.

Unabhängig von der Art und Weise, wie das Motorreduziergetriebe sonst konfiguriert ist, ist es von besonderem Vorteil, wenn ein, mehrere oder sämtliche Komponenten des jeweiligen Motorreduziergetriebes mit oder aus einem Kunststoffmaterial gefertigt sind. Damit lassen sich die Betriebsgeräusche und/oder deren Übertragung bei der erfindungsgemäßen Antriebsanordnung weiter reduzieren.

Besonders bevorzugt ist eine Antriebsanordnung, welche den Aufbau eines Mittelmotorantriebs aufweist und insbesondere ein gemeinsames Gehäuse umfasst, in welchem die Übertragungseinrichtung, das Stirnradgetriebe und insbesondere die ersten und zweiten Stirnradschaltgetriebe, Koppeleinrichtungen, der Stellantrieb, der elektrische Antrieb, das Motoreduziergetriebe und/oder - zumindest teilweise - die Kurbelwelle aufgenommen sind.

Die vorliegende Erfindung betrifft des Weiteren ein mit Muskelkraft und/oder - insbesondere zusätzlich - mit Motorkraft antreibbares Fahrzeug und insbesondere ein Elektrofahrrad, eBike, Pedelec oder dergleichen. Das erfindungsgemäße Fahrzeug weist mindestens ein Rad auf sowie eine erfindungsgemäß ausgebildete Antriebsanordnung, mit welcher das mindestens eine Rad des Fahrzeuges antreibbar ist.

### Kurzbeschreibung der Figuren

Unter Bezugnahme auf die beigefügten Figuren werden Ausführungsformen der Erfindung im Detail beschrieben.

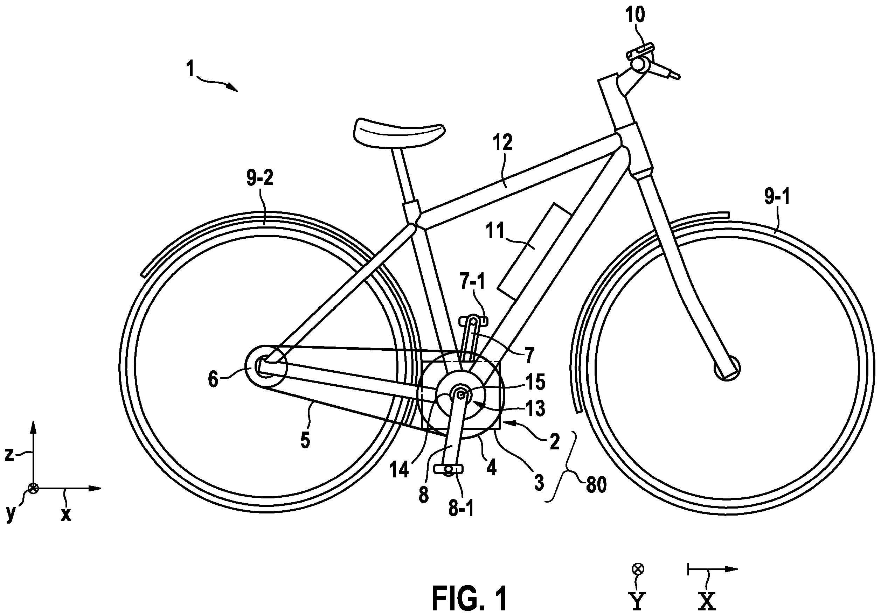

- Figur 1: ist eine schematische Darstellung eines Beispiels eines Fahrzeuges nach Art eines Elektrofahrrades, bei welchem eine erste Ausführungsform der Erfindung realisiert ist.

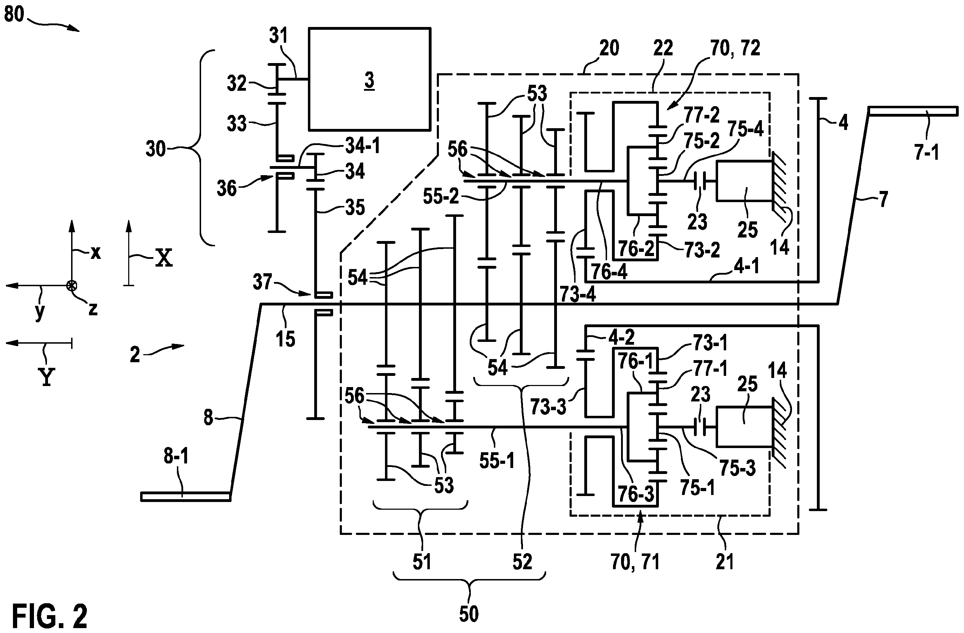

- Figuren 2 bis 16: sind schematische Draufsichten auf verschiedene Ausführungsformen der erfindungsgemäßen Antriebsanordnung mit Kurbeltrieb und mit elektrischem Antrieb, und zwar mit unterschiedlichen Ausgestaltungen hinsichtlich der Koppeleinrichtungen und deren Verstelleinheiten, der Anordnung der einzelnen Stirnradschaltgetriebe, eines gegebenenfalls vorhandenen Motorreduziergetriebes und einer gegebenenfalls vorhandenen Hochtreiberstufe.

### Bevorzugte Ausführungsformen der Erfindung

Nachfolgend werden unter Bezugnahme auf die Figuren 1 bis 16 Ausführungsbeispiele der Erfindung und deren technischer Hintergrund im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weitere Eigenschaften können in beliebiger Form voneinander isoliert und beliebig miteinander kombiniert werden, ohne den Kern der Erfindung zu verlassen.

Zunächst wird unter Bezugnahme auf Figur 1 beispielhaft ein Elektrofahrrad als eine bevorzugte Ausführungsform des erfindungsgemäßen Fahrzeugs 1 im Detail beschrieben.

Das Fahrzeug 1 umfasst als Elektrofahrrad einen Rahmen 12, an dem ein Vorderrad 9-1, ein Hinterrad 9-2 und ein Kurbeltrieb 2 mit zwei Kurbeln 7, 8 mit Pedalen 7-1 und 8-1 angeordnet sind. Ein elektrischer Antrieb 3 ist in den Kurbeltrieb 2 integriert. Am Hinterrad 9-2 ist ein Ritzel 6 angeordnet.

Ein Antriebsmoment, welches durch den Fahrer und/oder durch den elektrischen Antrieb 3 bereitgestellt wird, wird von einem Kettenblatt 4 am Kurbeltrieb 2 über eine Kette 5 auf das Ritzel 6 übertragen.

Am Lenker des Fahrzeuges 1 ist ferner eine Steuereinheit 10 angeordnet, welche mit dem gegebenenfalls ausgebildeten elektrischen Antrieb 3 verbunden ist. Im oder am Rahmen 12 ist ferner eine Batterie 11 ausgebildet, welche zur Stromversorgung des elektrischen Antriebes 3 dient.

Im Rahmen 12 integriert ist ein Kurbellager 13 oder Tretlager, welches ein Kurbelgehäuse 14 und eine Kurbelwelle 15 aufweist.

Die erfindungsgemäße Antriebsanordnung 80 des erfindungsgemäßen Fahrzeuges 1 aus Figur 1 weist den Kurbeltrieb 2 und den elektrischen Antrieb 3 auf, wobei die von diesen erzeugbaren Drehmomente über eine entsprechende und in Figur 1 nicht dargestellte Übertragungseinrichtung 20 mit einem schaltbaren Planetengetriebe 21 aufnehmbar und an das Kettenblatt als Abtriebselement 4 übertragbar sind.

Figur 2 ist eine schematische Draufsicht auf eine Ausführungsform der erfindungsgemäßen Antriebsordnung 80 mit einem elektrischen Antrieb 3 und einem Kurbeltrieb 2.

Zur Übertragung von Leistung und von Drehmomenten vom Kurbeltrieb 2 und/oder vom elektrischen Antrieb 3 ist eine Übertragungseinrichtung 20 ausgebildet, welche als Schaltgetriebe ein Stirnradgetriebe 50 mit einem ersten Stirnradschaltgetriebe 51 und mit einem zweiten Stirnradschaltgetriebe 52 als Teilgetriebestrukturen aufweist.

Bei der Ausführungsform gemäß Figur 2 sind über den Kurbeltrieb 2 ein mit Muskelkraft durch einen Benutzer erzeugtes Drehmoment und über den elektrischen Antrieb 3 ein mit Motorkraft erzeugtes Drehmoment erzeugbar und die Kurbelwelle 15 aufprägbar.

Dabei wird in der Ausführungsform gemäß Figur 2 das mit Muskelkraft erzeugte Drehmoment direkt über die Pedale 7-1 und 8-1 und die Kurbeln 7 und 8 an die Kurbelwelle 15 übertragen.

Zwischen dem elektrischen Antrieb 3, also einem Elektromotor, ist ein Motorreduziergetriebe 30 ausgebildet. Dieses ist als mehrstufiges Stirnradgetriebe mit Stirnrädern 32, 33, 34 und 35 in dieser Reihenfolge von der Motorwelle 31 zur Kurbelwelle 15 hin angeordnet und weist in der Ausführungsform der Figur 2 zwischen dem Stirnrad 33 und der Welle 34-1 des Stirnrades 34 einen ersten Freilauf 36 und zwischen dem Stirnrad 35 und der Kurbelwelle 15 einen zweiten Freilauf 37 auf.

Die Freiläufe 36 und 37 können voneinander unabhängig schaltbar ausgebildet sein.

Dies sind die Komponenten der Antriebsseite der Antriebsanordnung 80 der Ausführungsform gemäß Figur 2.

Auf der Abtriebsseite ist zur Fortleitung der Leistung und des Drehmoments ein Abtriebselement 4, z.B. in Form eines Kettenblatts oder dergleichen ausgebildet. Dieses sitzt in der Ausführungsform gemäß Figur 2 auf einer Hohlwelle 4-1 koaxial zur Kurbelwelle 15 auf.

Die Hohlwelle 4-1 besitzt an dem vom Abtriebselement 4 abgewandten Ende, also auf der Antriebsseite, ein Stirnrad 4-2 zum Kämmen mit einem aus dem ersten Stirnradschaltgetriebe 51 und dem zweiten Stirnradschaltgetriebe 52 bestehenden Stirnradschaltgetriebe 50 auf dessen Abtriebsseite.

Die Stirnradschaltgetriebe 51 und 52 sind jeweils mehrstufig und in der Ausführungsform gemäß Figur 2 mit drei Stufen, ausgebildet, und zwar mit entsprechenden ersten Stirnrädern 53, welche mit zweiten Stirnrädern 54 kämmen. Die ersten Stirnräder 53 sitzen in den Stirnradschaltgetrieben 51 und 52 auf einer jeweiligen Welle 55-1, 55-2, an welcher sie über eine schaltbare Verbindungen 56 individuell schaltbar koppelbar sind. Die zweiten Stirnräder 54 der ersten und zweiten Stirnradschaltgetriebe 51, 52 sind drehfest mit der Kurbelwelle 15 verbunden.

An die Wellen 55-1 und 55-2 des ersten bzw. zweiten Stirnradschaltgetriebes 51 bzw. 52 schließen sich jeweils eine Welle 76-3 bzw. 76-4 einer in Richtung des Leistungs- und Drehmomentenflusses stromabwärts gelegenen ersten bzw. zweiten Koppeleinrichtung 21 bzw. 22 der Übertragungseinrichtung 20 an. Die Wellen 55-1, 76-3 einerseits und 55-2, 76-4 andererseits können jeweils als eine materialeinstückige Welle ausgebildet sein.

Die ersten und zweiten Koppeleinrichtungen 21 und 22 bestehen in der Ausführungsform gemäß Figur 2 jeweils aus einer Reibkupplung 23 und einem Aktuator 25 zur Betätigung der Reibkupplung 23.

Im ausgekuppelten Zustand der Kupplung 23, z.B. bei einem zurückgefahrenen Aktuator 25, ist die Kupplung 23 in sich frei beweglich, z.B. drehbar um die jeweilige Achse 75-3 bzw. 75-4.

Im eingekuppelten Zustand der Kupplung 23, z.B. bei vorgefahrenem Aktuator 25, ist die jeweilige Achse 75-3 bzw. 75-4 in Bezug auf das äußere Gehäuse 14 drehfest gehaltert.

Zwischen der Kupplung 23 und dem jeweiligen Stirnradschaltgetriebe 51, 52 befindet sich ein Planetenkoppelgetriebe 70 mit einem ersten Planetengetriebe 71 und einem zweiten Planetengetriebe 72. Das erste Planetengetriebe 71 des Planetenkoppelgetriebes 70 ist der ersten Koppeleinrichtung 21 und dem ersten Stirnradschaltgetriebe 51 zugeordnet, das zweite Planetengetriebe 72 ist der zweiten Koppeleinrichtung 22 und dem zweiten Stirnradschaltgetriebe 52 zugeordnet.

Die Planetengetriebe 71 und 72 sind im Wesentlichen gleich aufgebaut und besitzen auf der Achse 75-3 bzw. 75-4 und mit dieser drehfest verbunden ein um die Achse 75-3, 75-4 rotierbares Sonnenrad 75-1 bzw. 75-2 des ersten bzw. des zweiten Planetengetriebes 71, 72. Koaxial zu den Achsen 75-3, 75-2 und zum jeweiligen Sonnenrad 75-1, 75-2 sind Planetenträger 76-1, 76-2 mit Planeten 77-1, 77-2 angeordnet. Die oben beschriebenen Achsen 76-3, 76-4 in Fortführung der Achsen 55-1 und 55-2 der ersten und zweiten Stirnradschaltgetriebe 51, 52 bilden die jeweiligen Drehachsen der Planetenträger 76-1, 76-2. Außerhalb der Planetenträger 76-1, 76-2 und der Planeten 77-1, 77-2 ist jeweils ein Hohlrad 73-1, 73-2 mit Innenverzahnung angeordnet, so dass die Planeten 77-1, 77-2 mit der Außenverzahnung der Sonnenräder 75-1, 75-2 und der Innenverzahnung der Hohlräder 73-1, 73-2 kämmen können.

In Fortführung der Hohlräder 73-1, 73-2 und mit diesen drehfest verbunden sind Stirnradstufen 73-3, 73-4 ausgebildet, welche zum Kämmen mit der Stirnradstufe 4-2 der Welle 4-1 des Abtriebselements 4 angeordnet sind.

Durch diese Maßnahmen wird der Leistungs- und Drehmomentenfluss vom Kurbeltrieb 2 und vom elektrischen Antrieb 3, ausgehend von der Eingangsseite, zur Ausgangsseite beim Abtriebselement 4 hin mit einer variablen Übersetzung steuerbar.

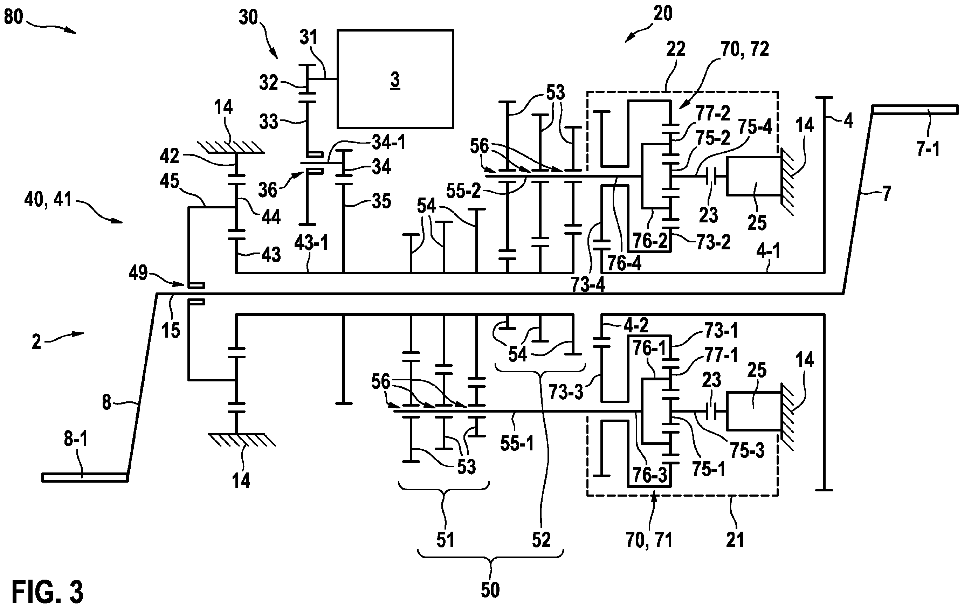

Figur 3 zeigt eine andere Ausführungsform der erfindungsgemäßen Antriebsanordnung 80, wobei jedoch Kernaspekte der ersten und zweiten Koppeleinrichtungen 21 und 22 der Übertragungseinrichtung 20 und die Ausgestaltung der ersten und zweiten Stirnradschaltgetriebe 51 und 52 sowie des Motorreduziergetriebes 30 im Wesentlichen mit demjenigen aus Figur 2 übereinstimmen.

Jedoch greifen bei der Ausführungsform gemäß Figur 3 das Stirnrad 35 des Motorreduziergetriebes 30 und die zweiten Stirnräder 54 der ersten und zweiten Stirnradschaltgetriebe 51 und 52 nicht direkt auf die Kurbelwelle 15 zu, sondern auf eine koaxial zur Kurbelwelle 15 und zur Welle 4-1 des Abtriebselements 4 angeordnete Hohlwelle 43-1 einer in Bezug auf den Leistungs- und Drehmomentenfluss eingangsseitig angeordneten Hochtreiberstufe 40 mit Planetengetriebe 41 und in koaxialer Verbindung mit dessen Sonnenrad 43. Die Hochtreiberstufe 40 dient dazu, das hohe Eingangsdrehmoment des Fahrers zu reduzieren und weist im Zusammenhang mit dem Planetengetriebe 41 einen Planetenträger 45 mit einem zur Kurbelwelle 15 schaltbaren Freilauf 49 und mit Planeten 44, das zentral innenliegende Sonnenrad 43 und ein koaxial außenliegendes Hohlrad 42 mit Innenverzahnung und drehfester Verbindung zum Gehäuse 14 auf.

Die Anordnung des Planetengetriebes 41 der Hochtreiberstufe 40 ist so gewählt, dass die Planeten 44 auf dem Planetenträger 45 rotieren und dabei die Außenverzahnung des Sonnenrades 43 und die Innenverzahnung des Hohlrades 42 kämmen können.

Zur Übertragung der durch Muskelkraft über den Kurbeltrieb 2 und der durch den elektrischen Antrieb 3 mittels des Motors erzeugte Drehmomente von der Eingangsseite zum abtriebsseitig gelegenen Abtriebselement 4 hin ist das ausgangsseitige Stirnrad 35 des Motorreduziergetriebes 30 mit der Hohlwelle 43-1 verbunden. Gleichzeitig bildet die Hohlwelle 43-1 eine koaxiale Fortführung des Sonnenrades 43, so dass auf diese Weise auch das durch Muskelkraft erzeugte Drehmoment aus dem Kurbeltrieb 2 zur Ausgangsseite hin übermittelbar ist.

Bei den Ausführungsformen gemäß den Figuren 2 und 3 befinden sich die ersten und zweiten Stirnräder 53 und 54 der ersten und zweiten Stirnradschaltgetriebe 51 und 52 in Bezug auf den Leistungs- und Drehmomentenfluss quasi auf der Eingangsseite, nämlich entweder direkt an der Kurbelwelle 15 oder an der Hohlwelle 43-1 des Sonnenrades 43 der Hochtreiberstufe 40.

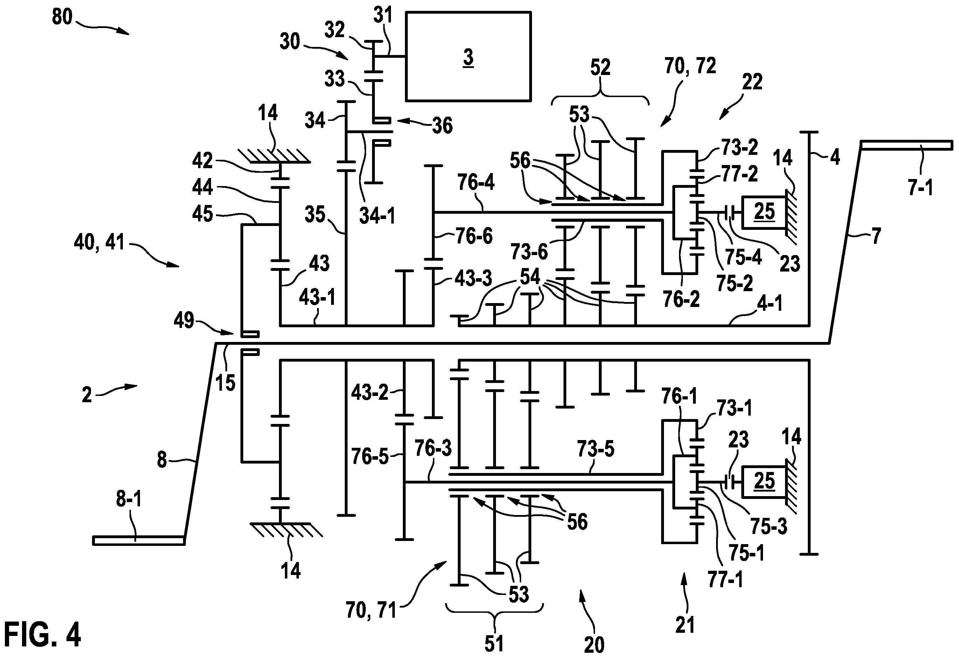

Die Ausführungsform der erfindungsgemäßen Antriebsanordnung 80 gemäß Figur 4 entspricht in wesentlichen Aspekten, nämlich hinsichtlich der Koppeleinrichtungen 21, 22, des Motorreduziergetriebes 30 sowie der Hochtreiberstufe 40, dem Kern nach der Ausführungsform gemäß Figur 3.

Im Unterschied zu dieser sind jedoch bei der Ausführungsform gemäß Figur 4 die ersten und zweiten Stirnräder 53 und 54 der ersten und zweiten Stirnradschaltgetriebe 51 und 52 auf der Abtriebsseite der Übertragungseinrichtung 20, also dem Abtriebselement 4 zugewandt angeordnet und insbesondere an der jetzt verlängerten Hohlwelle 4-1 zum Abtriebselement 4 angebracht.

Zusätzlich besteht ein Unterschied im Hinblick auf die Ankopplung der getrennt vorgesehenen ersten und zweiten Planetengetriebe 71 und 72 des Planetenkoppelgetriebes 70.

Bei den Ausführungsformen gemäß den Figuren 2 und 3 sind die Wellen 76-3, 76-4 der Planetenträger 76-1, 76-2 als Verlängerungen der Wellen 55-1,55-2 der Stirnradschaltgetriebe 51, 52 über schaltbare Verbindungen 56 eingangsseitig oder antriebsseitig mit den ersten Stirnräder 53 der ersten und zweiten Stirnradschaltgetriebe 51, 52 verbunden. Dagegen sind die Hohlräder 73-1, 73-2 der Planetengetriebe 71, 72 über drehfest gekoppelte Stirnradstufen 73-3, 73-4 ausgangsseitig oder abtriebsseitig mit dem Abtriebselement 4 gekoppelt.

Bei der Ausführungsform gemäß Figur 4 liegen die Verhältnisse jedoch anders.

Dort sind die Wellen 76-3, 76-4 der Planetenträger 76-1, 76-2 antriebsseitig oder eingangsseitig mit Stirnräder 76-5, 76-6 an den Wellen 76-3, 76-4 bzw. an den Stirnrädern 43-2, 43-3 der Hohlwelle 43-1 zum Sonnenrad 43 der Hochtreiberstufe 40 gekoppelt. Die Hohlräder 73-1, 73-2 der ersten und zweiten Planetengetriebe 71, 72 des Planetenkoppelgetriebes 70 sind bei der Ausführungsform gemäß Figur 4 nicht als Stirnradstufe weitergeführt, sondern laufen in zu den Wellen 76-3, 76-4 der Planetenträger 76-1, 76-2 koaxial verlaufenden Hohlwellen 73-5, 73-6 aus, an welche die ersten Stirnräder 53 der Stirnradschaltgetriebe 51, 52 über schaltbare Verbindungen 56 steuerbar koppelbar sind.

Die ersten Stirnräder 53 der Stirnradschaltgetriebe 51, 52 kämmen mit den zweiten Stirnräder 54 der Stirnradschaltgetriebe 51, 52, welche an der Hohlwelle 4-1 zum Abtriebselement 4 angebracht sind.

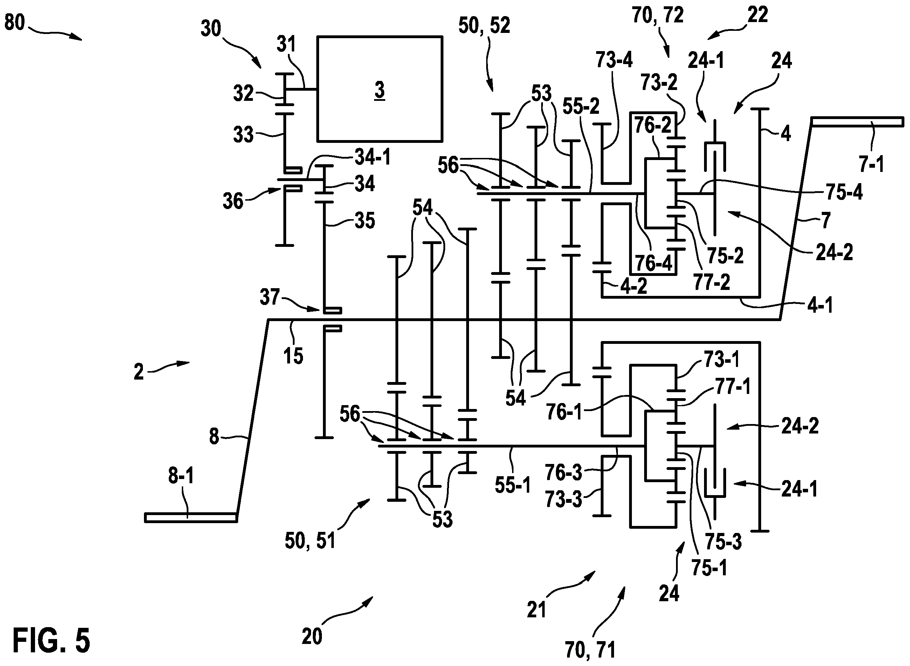

Bei der Ausführungsform der erfindungsgemäßen Antriebsanordnung 80 gemäß Figur 5 liegt im Unterschied zur Ausführungsform gemäß Figur 2 anstelle einer Kupplung 23 mit Aktuator 25 eine Bremse 24 mit einer Bremsbacke 24-1 und einer Bremsscheibe 24-2 vor.

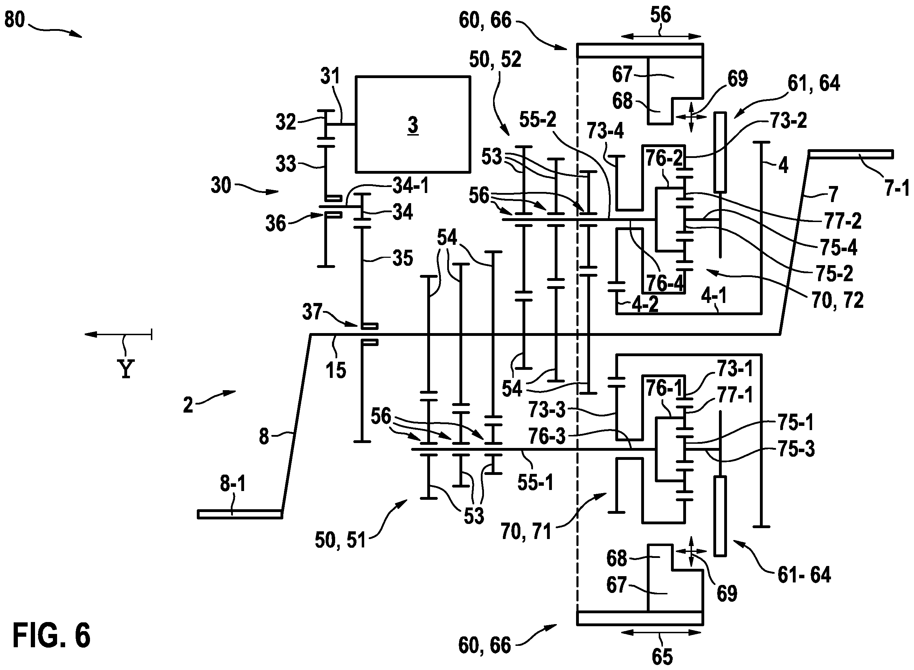

Bei der Ausführungsform gemäß Figur 6 ist im Unterschied zur Ausführungsform gemäß Figur 2 bei der erfindungsgemäßen Antriebsanordnung 80 im Zusammenhang mit den ersten und zweiten Planetengetrieben 71 und 72 des Koppelgetriebes 70 zum Sperren bzw. Freigeben der Sonnenräder 75-1, 75-2 jeweils ein mit den Sonnenrädern 75-1, 75-2 drehfest mit dem Mitnehmerelement 64 nach Art eines Schaltfingers 61 ausgebildet.

Durch Verschieben des Stellantriebs 60 mit der Schaltkulisse 66 in der Verschieberichtung 65 koaxial zur Erstreckungsrichtung Y der Kurbelwelle 15, an dessen Kulissenkörper 67 ein Anschlagselement 68 und eine Lücke 69 ausgebildet sind, kann die Rotation des jeweiligen Sonnenrads 75-1, 75-2 beim Anschlagen des Mitnehmerelements 64 des Schaltfingers 61 am Anschlagselement 68 des Kulissenkörpers 67 gesperrt werden. Beim Vorliegen einer Lücke 69 im Bewegungsweg des Schaltfingers 61 ist dagegen eine freie Rotation des Schaltfingers 61 und damit des mit dem Schaltfinger 61 verbundenen Sonnenrads 75-1, 75-2 möglich.

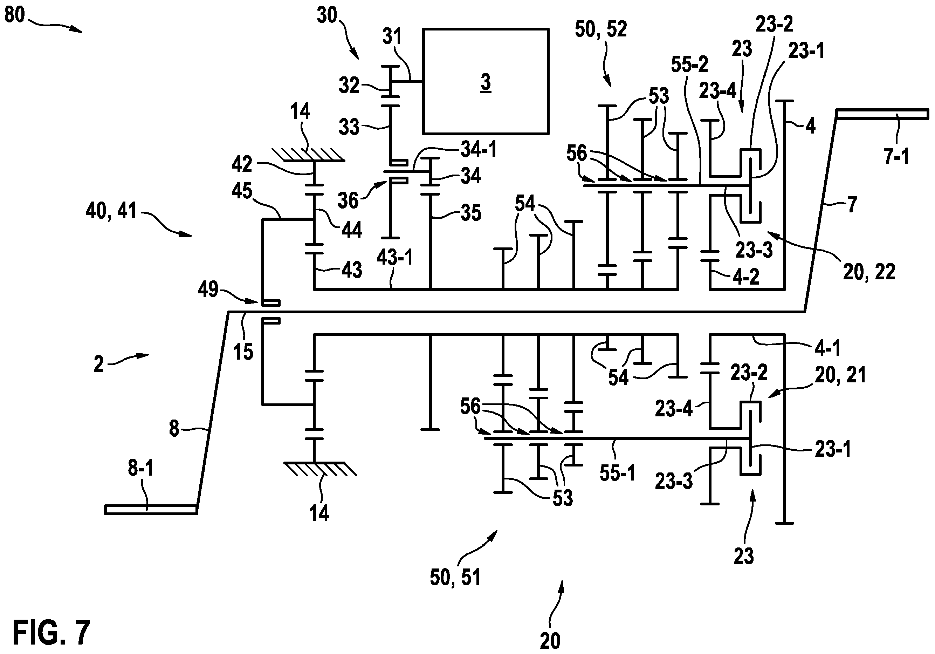

Die Ausführungsform der erfindungsgemäßen Antriebsanordnung 80 gemäß Figur 7 entspricht im Wesentlichen der Ausführungsform aus Figur 3. Im Unterschied ist bei der Ausführungsform gemäß Figur 7 die Anordnung aus Planetenkoppelgetriebe 70 mit erstem und zweiten Planetengetriebe 71 bzw. 72 ersetzt durch eine reine Reibkupplung 23.

Jede der Reibkupplungen 23 wird gebildet von einem ersten Reibelement 23-1, z.B. in Drehtellerform, und einem zweiten Reibelement 23-2, z.B. in Topfform das jeweilige erste Reibelement 23-1 in sich aufnehmend, die miteinander über Reibung gekoppelt oder voneinander entkoppelt werden können.

Das erste Reibelement 23-1 läuft in einer Zwischenwelle 23-3 aus, an welche sich die jeweilige Welle 55-1, 55-2 des jeweiligen Stirnradschaltgetriebes 51, 52 drehfest verbunden anschließt und an welche somit die ersten Stirnräder 54 der ersten und zweiten Stirnradschaltgetriebe 51 und 52 über schaltbare Verbindungen 56 koppelbar sind.

Das zweite Reibelement 23-2, z.B. in Form eines Topfes oder Gehäuses, läuft in einer Stirnradstufe 23-4 mit Außenverzahnung aus, welche mit der Stirnradstufe 4-2 der Hohlwelle 4-1 zum Abtriebselement 4 kämmt.

Im entkoppelten Zustand der ersten und zweiten Reibelemente 23-1, 23-2 sind diese um die Zwischenwelle 23-3 ohne Wechselwirkung zueinander frei rotierbar, so dass keine Leistungs- oder Drehmomentübertragung erfolgt.

Bei Eingriff der ersten und zweiten Reibelemente 23-1, 23-2 sind diese miteinander drehfest verbunden und beim Durchschalten einer der schaltbaren Verbindungen 56 erfolgt eine gemeinsame Rotation um die Zwischenwelle 23-2 mit Leistungs- und Drehmomentübertragung zum Abtriebselement 4 hin.

Bei den Ausführungsformen der erfindungsgemäßen Antriebsanordnung gemäß den Figuren 2 bis 6 war das Planetenkoppelgetriebe 70 ausgebildet mit voneinander getrennten einzelnen Planetengetrieben 71 und 72 mit entsprechend getrennten Koppeleinrichtungen 21 und 22.

Bei den Ausführungsformen der erfindungsgemäßen Antriebsanordnung gemäß den Figuren 8 bis 15 ist das Planetenkoppelgetriebe 70 dagegen mit einzelnen Planetengetrieben 71' und 72' integriert ausgebildet, die zueinander koaxial ausgerichtet sind. Dabei greift das vorgesehene Motorreduziergetriebe 30 jeweils über den gemeinsamen Planetenträger 76 in drehfester Verbindung mit der Kurbelwelle 15, nämlich bei den Ausführungsformen gemäß den Figuren 8 bis 13, bzw. über Einkopplung über eine Hochtreiberstufe 40, bei den Ausführungsformen der Figuren 14 und 15, über die nachgeschalteten ersten und zweiten Stirnradschaltgetriebe 51 und 52 auf das Abtriebselement 4 zu.

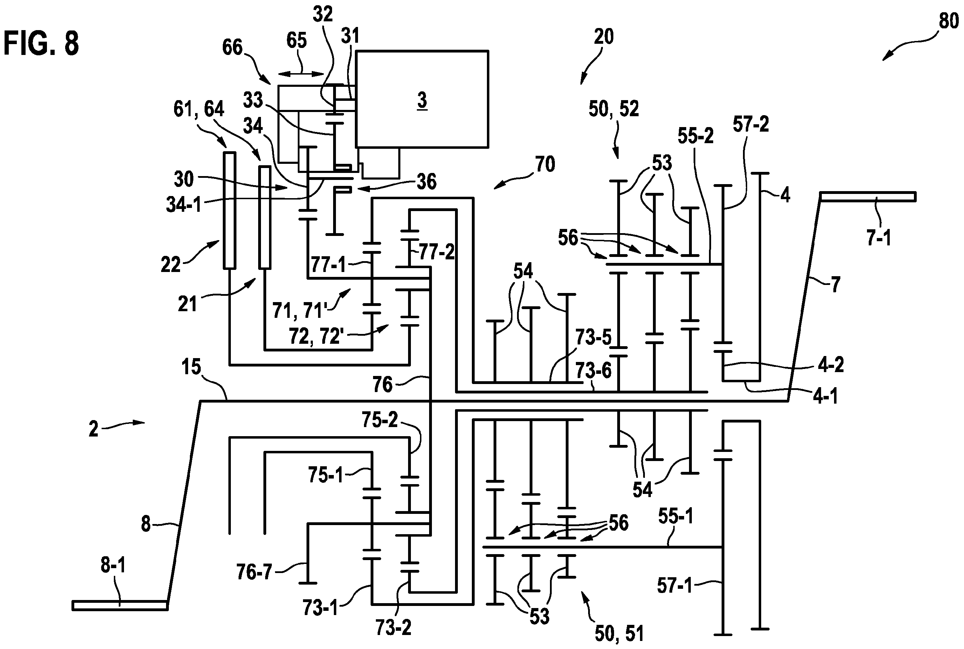

Bei den Ausführungsformen der Figuren 8 bis 15 ist am gemeinsamen Planetenträger 76 ein Stirnrad 76-7 ausgebildet, welches mit dem motorreduzierte Getriebe 30 des elektrischen Antriebs 3 steuerbar kämmt.

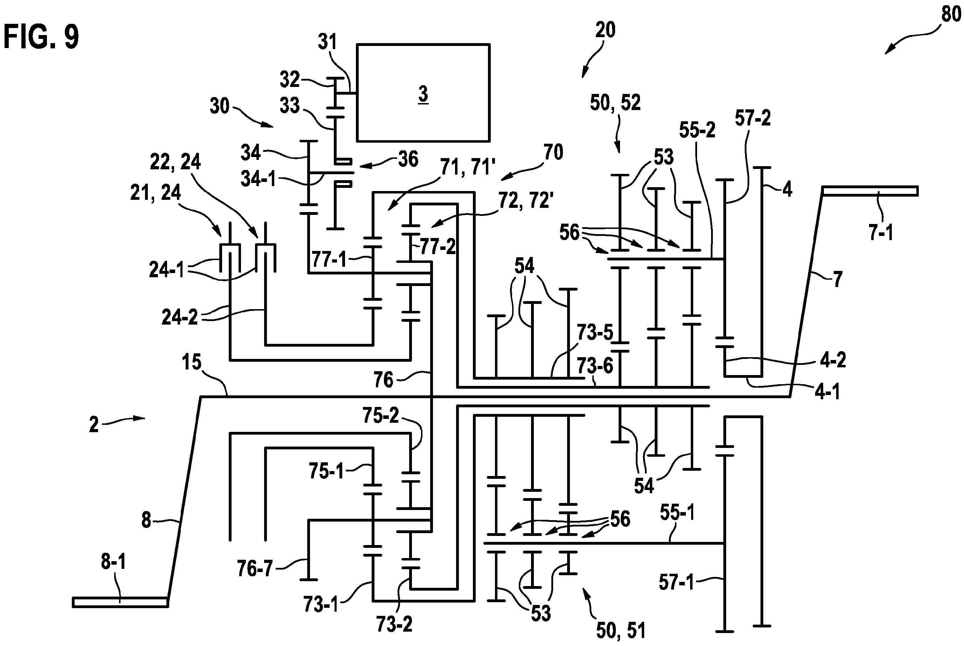

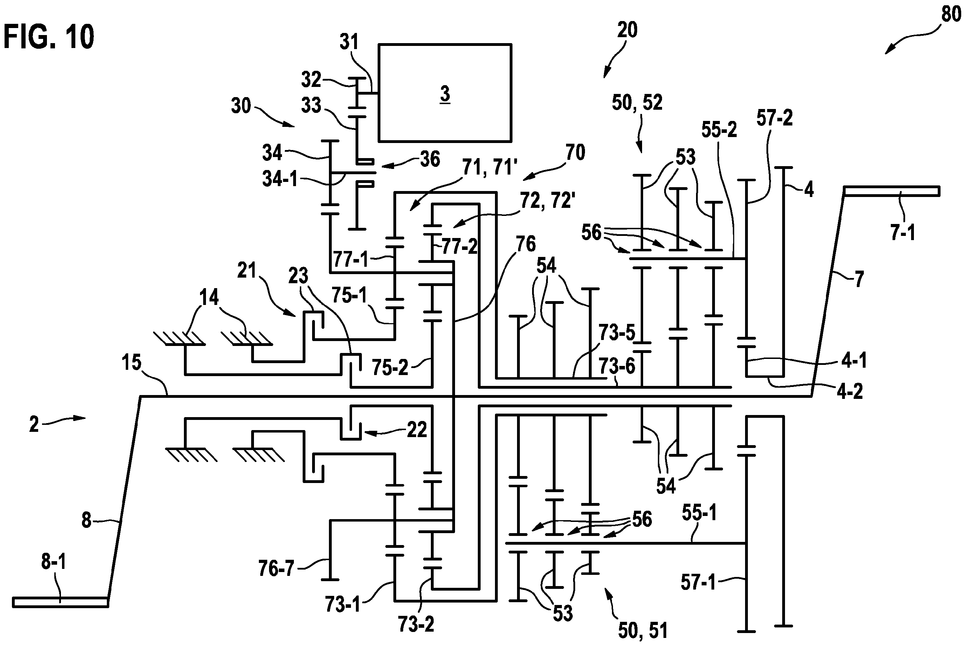

Bei den Ausführungsformen gemäß den Figuren 4 bis 16 sind bei der erfindungsgemäßen Antriebsanordnung die jeweiligen Koppeleinrichtungen 21 und 22 eingangsseitig ausgebildet, und zwar in Bezug auf den Leistungs- und Drehmomentenfluss. Dabei werden als Koppeleinrichtungen 21 und 22 im Wesentlichen die bereits vorgestellten Konzepte mit Schaltfinger 61 und Kulisse 66 gemäß Figur 8, mit Bremsen 24 gemäß Figur 9, über getrennte Reibkupplungen 23 gemäß den Figuren 10 bis 14 vorgesehen.

Die Hohlräder 73-1 und 73-2 der Teilegetriebe 71', 72' des integrierten Planetenkoppelgetriebes 70 besitzen bei den Ausführungsformen der Figuren 8 bis 15 zueinander und zur Kurbelwelle 15 koaxiale und ineinander geschachtelte Hohlwellen 73-5, 73-6, an denen die zweiten Stirnräder 54 der ersten und zweiten Stirnradschaltgetriebe 51 bzw. 52 drehfest angebracht sind. Die zweiten Stirnräder 54 kämmen mit den ersten Stirnrädern 53 der ersten und zweiten Stirnradschaltgetriebe 51, 52, wobei diese über schaltbare Verbindungen 56 steuerbar mit Wellen, die in Stirnrädern auslaufen und ihrerseits mit dem Stirnrad 4-2 der Hohlwelle 4-1 des Abtriebselements 4 kämmen, um den Leistungs- und Drehmomentenfluss zum Abtriebselement 4 hin zu bewirken.

Die Erfindung betrifft Elektrofahrräder (Pedelec/eBike) mit Mittelmotor und einer Fahrradschaltung zur Anpassung der begrenzten Antriebskraft des Fahrers an die unterschiedlichen Fahrwiderstände.

Bei Elektrofahrrädern mit Tretlagerantrieb ist die Anordnung einer Ketten- oder Nabenschaltung am Hinterrad und eines elektrischen Antriebs am Tretlager bekannt.

Zudem sind Tretlagerantriebe mit integriertem Schaltgetriebe bekannt, welche einen Hohlwellenmotor koaxial zur Tretkurbelwelle und ein zur Tretkurbelwelle achsparalleles Schaltgetriebe aufweisen.

Ferner können Reibringgetriebe als stufenlos verstellbare Fahrradschaltgetriebe in einen Pedelec/eBike-Tretlagerantrieb integriert werden. Ein Reibringgetriebe hat als reibschlüssiges Getriebe den Nachteil eines im Vergleich geringeren Wirkungsgrads, welcher sich auf die Batteriereichweite und die Fahrbarkeit ohne Motorunterstützung, insbesondere Fahren über 25 km/h bei Pedelecs, auswirkt.

Tretlagerantriebe mit integrierten Schaltungen auf der Basis von Stirnradgetrieben sind insbesondere beim Herunterschalten in einen niedrigeren Gang nicht unter Last oder nur unter geringer Teillast schaltbar. Des Weiteren weisen diese Schaltungen keine elektromechanisch aktuierte automatische Gangwahl auf. Sie haben zudem den gravierenden Nachteil, dass das Schalten nicht zugkraftunterbrechungsfrei erfolgt. Der Fahrer erfährt beim Schalten, insbesondere wenn er beschleunigt in die Pedale tritt, einen deutlich spürbaren Leerweg der Tretkurbeln.

Der Erfindung liegt unter anderem auch die Aufgabe zu Grunde, eine lastschaltfähige, zugkraftunterbrechungsfreie und effiziente Automatikfahrradschaltung in eine Antriebseinheit am Tretlager eines Pedelecs zu integrieren. Eine Schaltvorrichtung am Hinterrad kann entfallen. Dabei soll eine kompakte Darstellung des Pedelecantriebs erzielt werden.

Die Erfindung löst die gestellte Aufgabe mit dem Einsatz und der Integration eines schaltbaren Stirnradgetriebes 50 in der Form zweier Stirnradschaltgetriebe 51, 52 als Teilgetriebe, die über zwei Koppeleinrichtungen 21, 22 in den Leistungs- und Drehmomentenfluss steuerbar eingekoppelt werden können, um so einen vollautomatischen Gangwechsel ohne Zugkraftunterbrechung zu ermöglichen. Das schaltbare Stirnradgetriebe 50 übernimmt die Aufgabe der Fahrradschaltung bzw. der variablen Übersetzung für die Antriebskraft des Fahrers. Durch den Einsatz eines formschlüssigen Getriebes kann der Wirkungsgrad gegenüber einem integrierten reibschlüssigen Getriebe verbessert werden.

Beide Teilgetriebe 51, 52 besitzen einen gemeinsamen Getriebeausgang und können wechselseitig beispielsweise über Reibkupplungen 23 in den Leistungsfluss genommen werden.

Das Variieren der Übersetzung bzw. Schalten kann zunächst vor dem eigentlichen Gangwechsel durch das Einlegen des zu schaltenden Gangs bzw. durch die Wahl einer Übersetzung in dem jeweils lastfreien Teilgetriebe 51, 52 erfolgen. Mit einem Wechsel des Leistungsflusses bzw. einer Momentenübergabe von dem bisher belasteten Gang bzw. Teilgetriebe 51, 52 zu dem vorgewählten Gang bzw. dem lastfreien Teilgetriebe 52, 51 wird der Schaltvorgang mit Übersetzungsänderung vollzogen.

Mittels zweier Reibkupplungen 23 ist die Momentenübergabe zwischen beiden Teilgetrieben 51, 52 ohne Zugkraftunterbrechung möglich. Beim Schaltvorgang wird die Kupplung 23 des lastfreien Teilgetriebes 51, 52 mit dem vorgewählten Gang geschlossen und die Kupplung 23 des bisher belasteten Teilgetriebes 52, 51 gleichzeitig geöffnet.

Erfindungsgemäß können für die Darstellung der zugkraftunterbrechungsfreien Momentenübergabe zwischen beiden Teilgetrieben 51, 52 neben Reibkupplungen 23 auch Bremsen 24, schaltbare Freiläufe, Hubmagneten, Elektromotoren/Stellantriebe oder eine Schaltkulisse, mit der Zahnradwellen der Teilgetriebe blockiert werden können, eingesetzt werden.

Des Weiteren erfolgt erfindungsgemäß eine bevorzugte Anbindung der Schaltaktorik für die Momentenübergabe über ein Planetenkoppelgetriebe 70, entweder in integrierter Form mit Getriebestufen oder -teilen 71', 72' oder über getrennte einzelne Planetengetriebe 71, 72.

Die Momentenübergabe findet dann durch einfaches Blockieren und wieder Freigeben der Sonnenräder 75-1, 75-2 gegenüber dem Gehäuse 14 statt. Damit ist gegeben, dass die Schaltaktorik für die Momentenübergabe nicht mitrotiert, sondern drehfest mit dem Gehäuse 14 verbunden ist.

An das Schaltgetriebe 50 kann wahlweise ein Motor 3 über ein Reduziergetriebe 30 vorzugsweise am Eingang des Schaltgetriebes 50 angebunden werden.

Die Figuren 1 bis 16 zeigen bevorzugte Ausführungen und Varianten für den Aufbau eine erfindungsgemäßen Antriebsanordnung 80 z.B. eines Pedelec/eBike-Tretlagerantriebs mit einem integrierten zugkraftunterbrechungsfrei schaltbaren Stirnradgetriebe 50.

Das Stirnradschaltgetriebe 50 besteht in allen Ausführungen aus zwei Teilgetrieben 51, 52, die mittels einer Schaltaktorik wechselseitig in den Leistungsfluss zugeschaltet werden können.

Für die Schaltaktorik werden Reibkupplungen 23, Elektromotoren, Stellantriebe 60 (siehe Figuren 2 bis 4, 7 und 10 bis 16), Bremsen (Figuren 5 und 9) oder eine Schaltkulisse (Figuren 6 und 8), mit der entsprechende Zahnradwellen blockiert werden können, eingesetzt.

Alternativ können auch beispielsweise schaltbare Freiläufe oder Hubmagneten eingesetzt werden.

In den Ausführungen der Figuren 2 bis 6 und 8 bis 15 ist die Schaltaktorik bevorzugt über ein Planetenkoppelgetriebe 70 angebunden. Dadurch rotiert die Schaltaktorik nicht mit und das Zuschalten eines Teilgetriebes 51, 52 kann in einfacher Weise durch Festhalten des Sonnenrads 75-1, 75-2 drehfest am Gehäuse 14 stattfinden.

Ein Schaltvorgang kann erfindungsgemäß in zwei Schritten vollzogen werden:
(1) Vorwahl einer Übersetzung im lastfreien Teilgetriebe beispielsweise mittels einer Schaltstange mit Ziehkeil oder Klinken. An der Stelle, wo der Ziehkeil oder die Klinke das Zahnrad mit der Welle formschlüssig drehfest verbindet, kann das Drehmoment vom Zahnrad auf die Welle übertragen werden.
(2) Zugkraftunterbrechungsfreie Momentenübergabe beispielsweise mittels zweier Reibkupplungen 23 (Figuren 2 bis 4, 7, 9 bis 16) vom bisher belasteten Teilgetriebe 51, 52 zum lastfreien Teilgetriebe 52, 51 mit der vorgewählten Übersetzung. Dazu wird die Kupplung 23 des lastfreien Teilgetriebes 51, 52 mit dem vorgewählten Gang geschlossen und die Kupplung 23 des bisher belasteten Teilgetriebes 52, 51 gleichzeitig geöffnet.

Dem Stirnradschaltgetriebe 50 kann gemäß den Figuren 3, 5, 7, 14, 15 eine Planetenstufe 41 als Hochtreiberstufe 40 vorgeschaltet werden, um das hohe Eingangsdrehmoment des Fahrers zu reduzieren. Damit ist eine besonders kompakte Auslegung sowohl des Motorreduziergetriebes 30 als auch des Stirnradschaltgetriebes 50 möglich.

Zwei Freiläufe 36, 37, beispielsweise in Figur 3 zu sehen, dienen zum einen der Möglichkeit, rückwärts zu pedalieren und zum anderen der Abkopplung des Motors 3 bei seinem Ausfall bzw. Abschalten des Motors bei einer Fahrgeschwindigkeit über 25 km/h.

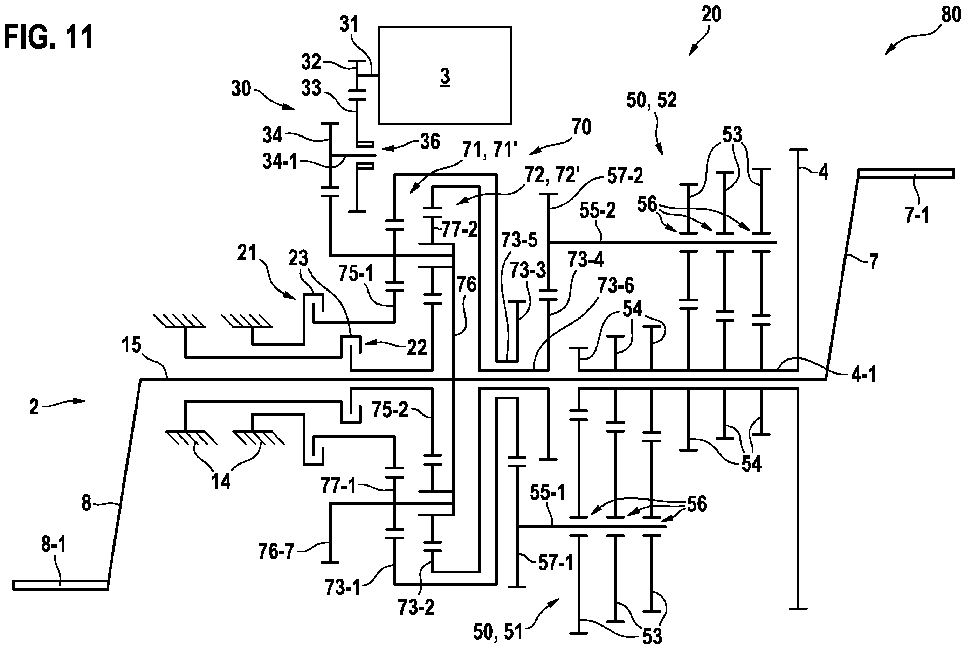

Die Figuren 4 und 11 zeigen ein Varianten, bei denen die Getriebestufen des Stirnradschaltgetriebes 50 am Getriebeausgang angeordnet sind.

Die Figuren 2, 3, 5 bis 10 und 13 bis 14 zeigen dagegen Anordnungen der Getriebestufen am Getriebeeingang.

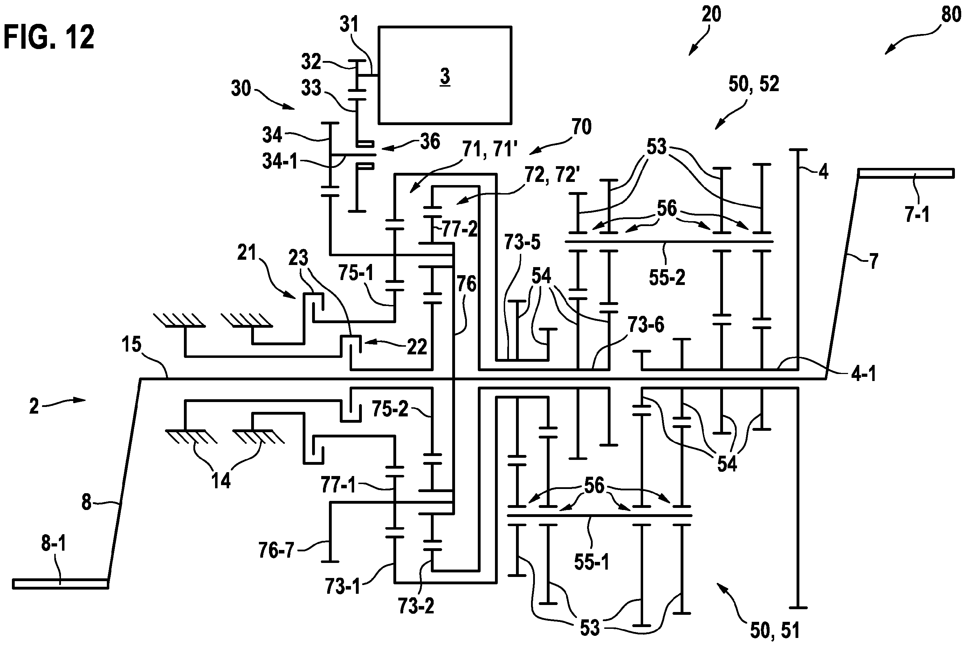

In Figur 12 sind Getriebestufen verteilt sowohl am Getriebeausgang als auch am Getriebeeingang angeordnet.

Die Figuren 6 und 8 zeigen Ausführungsformen der Antriebsanordnung 80 mit einer Schaltaktorik als Stellantrieb 60 mit Schaltfingern 61 und Schaltkulisse 66. Dabei sind die Schaltfinger 61 mit den Sonnenrädern 75-1, 75-2 des Planetenkoppelgetriebes 70 drehfest verbunden und können mittels einer Schaltkulisse 66, die parallel in der Richtung 65 zur Tretkurbelwelle 15 verfahren werden kann, blockiert werden.

In den Figuren 5 und 9 ist eine Schaltaktorik für die Momentenübergabe mit Bremsen 24 ausgeführt. Die Bremsen 24 sind bevorzugt Scheibenbremsen und können beispielsweise mittels Hydraulik aktuiert werden. Dabei sind die Scheiben 24-2 drehfest mit den Sonnenrädern 75-1, 75-2 verbunden und rotieren mit den Sonnenrädern 75-1, 75-2 mit.

Ähnlich wie bei den Reibkupplungen 23 können mit den beiden Bremsen 24 elektronisch aufeinander abgestimmt die Drehzahlen der Sonnenräder 75-1, 75-2 kontinuierlich und stufenlos verändert werden, um so das Moment von einem an das andere Teilgetriebe 51, 52 zugkraftunterbrechungsfrei zu übergeben.

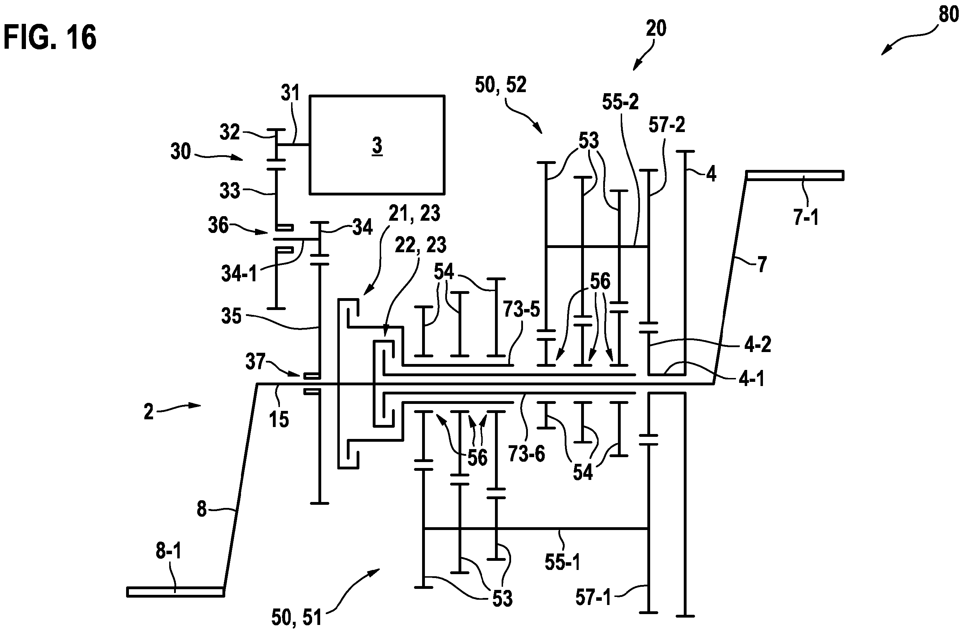

Die Figuren 7 und 16 zeigen alternative Ausführungsformen der Schaltaktorik ohne Anbindung über ein Planetengetriebe.

In den Figuren 2 bis 7 ist die Schaltaktorik für die Momentenübergabe an den Zwischenwellen 55-1, 55-2 der Teilgetriebe 51, 52 angebracht.

Die Figuren 8 bis 16 zeigen am Eingang der beiden Teilgetriebe 51, 52 des Schaltgetriebes 50 eine koaxiale Anordnung der Planetenstufen 71', 72' des Planetenkoppelgetriebes 70 sowie Reibkupplungen 23, Elektromotoren 3, Stellantriebe 60 zur Tretkurbelwelle 15. Die Zwischenwellen 55-1, 55-2 der Teilgetriebe 51, 52 zu den ersten Stirnrädern 53 besitzen in den Ausführungsformen der Figuren 8 bis 11 sowie 13 bis 16 weisen jeweils eine Stirnradstufen 57-1, 7 50-2 auf zum Kämmen mit dem Stirnrad 4-2 der Hohlwelle 4-1 zum Abtriebselement 4.

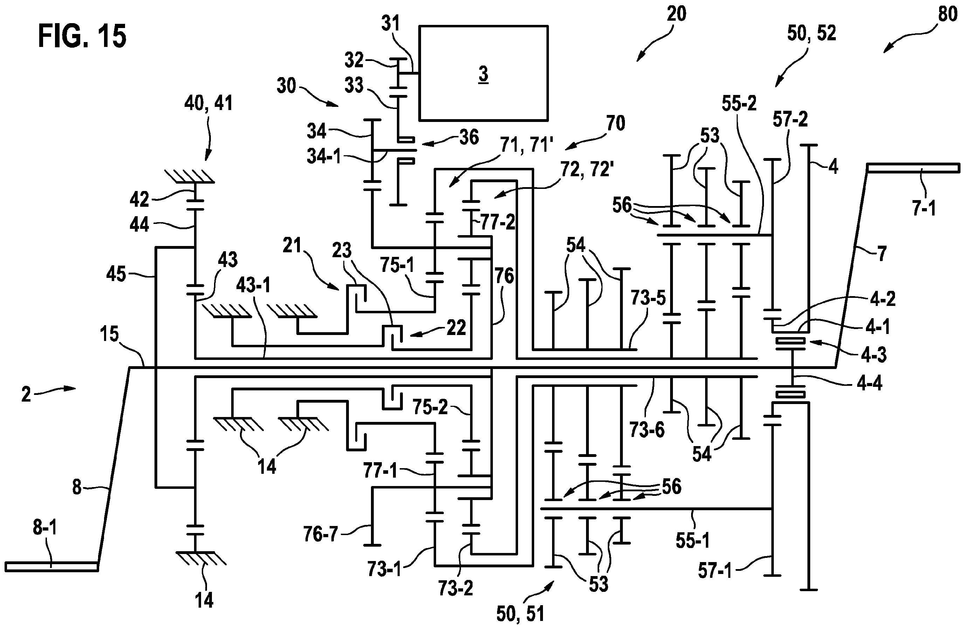

Über einen weiteren Freilauf 4-3 kann die Tretkurbelwelle 15 direkt mit dem Getriebeausgang des Schaltgetriebes 50 und damit direkt mit dem Kettenblatt 4 verbunden werden (Figur 15). Diese direkte Verbindung der Tretkurbelwelle 15 mit dem Kettenblatt 4 ergibt sich, wenn beide Teilgetriebe 51, 52 beispielsweise durch Öffnen der beiden Reibkupplungen 23 nicht belastet sind. Hierdurch kann in einfacher und kompakter Weise ein weiterer Gang, mit der Übersetzung eins, realisiert werden. Dabei bedeutet die Übersetzung mit einem Verhältnis 1:1 ein Direktgang 4-4 mit entsprechend besonders hohem Wirkungsgrad. Die mittels Freilauf 4-3 realisierte Übersetzung muss nicht aktiv geschaltet werden, sondern erfolgt durch den Überholfreilauf mechanisch selbstschaltend.

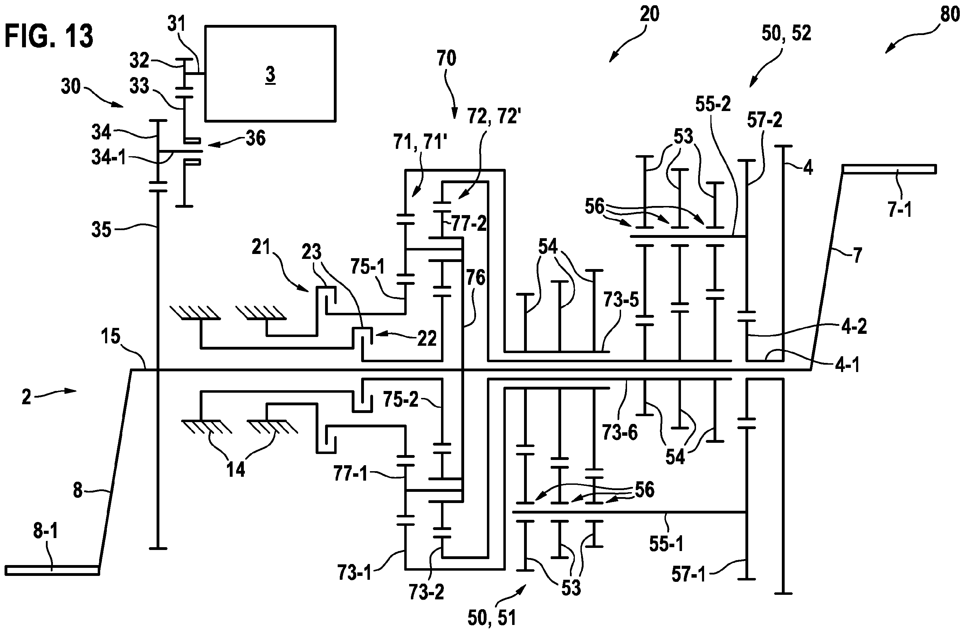

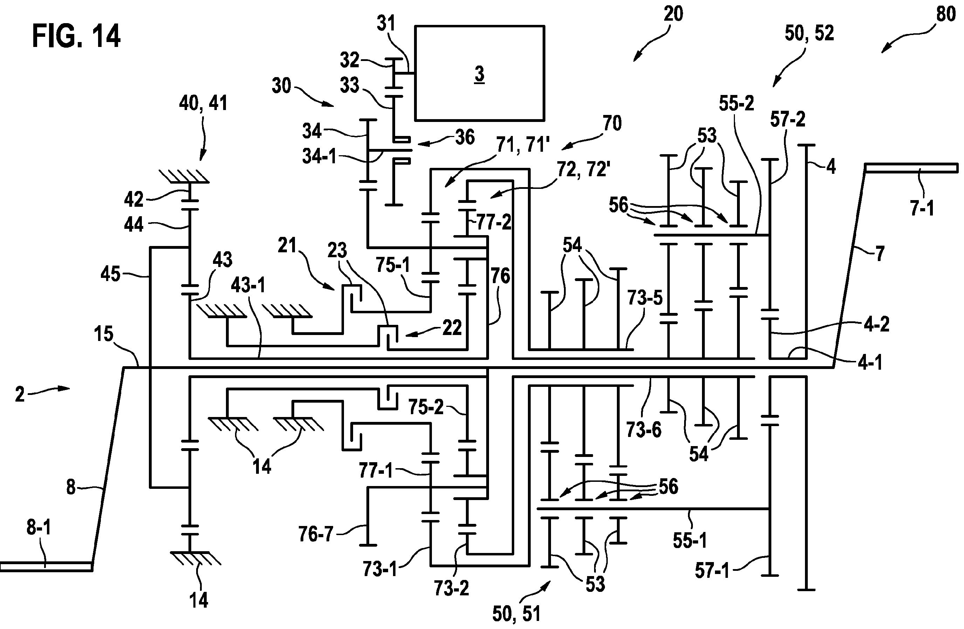

Eine Anbindung eines Motors 3 über ein Reduziergetriebe 30 an das Schaltgetriebe 50 erfolgt bevorzugt am Eingang des Schaltgetriebes 50 entweder durch eine Verbindung mit dem gemeinsamen Planetensteg 76 (z.B. Figur 14) des Planetenkoppelgetriebes oder in direkter Verbindung, ggf. über einen Freilauf 36, 49, mit der Tretkurbelwelle (z.B. Figuren 3 und 13).

Im Folgenden werden die Ausführungsformen der erfindungsgemäßen Antriebsanordnung aus den Figuren 2 bis 16 nochmals ihrem Kern nach zusammengefasst dargestellt.
- Figur 2:: Erfindungsgemäße Antriebsanordnung 80 als Pedelec/eBike-Tretlagerantrieb mit einem integrierten zugkraftunterbrechungsfrei schaltbaren Stirnradgetriebe 50 als Schaltgetriebe, welches aus zwei Teilgetrieben 51, 52 aufgebaut ist. Mittels zweier Aktoren 25 mit Reibkupplung 23 an den Zwischenwellen 55-1, 55-2 der Teilgetriebe 51, 52 kann das Moment von einem Teilgetriebe zum anderen übergeben werden.
- Figur 3:: Aufbau einer erfindungsgemäßen Antriebsanordnung 80 mit vorgeschalteter Hochtreiberplanetenstufe 40, um das hohe Eingangsdrehmoment des Fahrers zu reduzieren.
- Figur 4:: Anordnung der Getriebestufen 51, 52 des Stirnradschaltgetriebes 50 am Getriebeausgang, also dem Abtriebselement 4 zugewandt.
- Figur 6:: Ausführung einer Schaltaktorik für die Momentenübergabe zwischen den Teilgetrieben 51, 52 mit Stellantrieb mit Schaltfingern 61 und verfahrbarer Schaltkulisse 66.
- Figur 7:: Ausführung der Schaltaktorik für die Momentenübergabe zwischen den Teilgetrieben 51, 52 mit zwei Reibkupplungen 23 an den Zwischenwellen 55-1, 55-2 der Teilgetriebe ohne Anbindung über ein Planetengetriebe.
- Figur 8:: Ausführung der Schaltaktorik für die Momentenübergabe zwischen den Teilgetrieben 51, 52 mit Schaltfingern 61 und Schaltkulisse 66 am Eingang der beiden Teilgetriebe 51, 52 des Stirnradschaltgetriebes 50. Es besteht eine koaxiale Anordnung der Planetenstufen 71', 72' des Planetenkoppelgetriebes 70 zur Tretkurbelwelle 15. Es liegt fernere eine Anordnung der Getriebestufen 51, 52 des Stirnradschaltgetriebes 50 am Getriebeeingang vor. Gemeinsamer Ausgang der beiden Teilgetriebe. Die Anbindung des Motors 3 erfolgt über ein Reduziergetriebe 30 am gemeinsamen Planetensteg 76.
- Figur 9:: Ausführung der Schaltaktorik für die Momentenübergabe zwischen den Teilgetrieben mit Bremsen 24, insbesondere Scheibenbremsen, am Eingang der beiden Teilgetriebe 51, 52 des Stirnradschaltgetriebes 50.
- Figur 10:: Ausführung der Schaltaktorik für die Momentenübergabe zwischen den Teilgetrieben 51, 52 mit zwei Reibkupplungen 23 am Eingang der beiden Teilgetriebe 51, 52 des Stirnradschaltgetriebes 50 und mit koaxialer Anordnung der Planetenstufen 71', 72' des Planetenkoppelgetriebes 70 und Reibkupplungen 23 zur Tretkurbelwelle 15.
- Figur 11:: Ausführung mit Schaltaktorik für die Momentenübergabe zwischen den Teilgetrieben 51, 52 am Eingang der beiden Teilgetriebe 51, 52 des Stirnradschaltgetriebes 50 mit Anordnung der Getriebestufen 51, 52 des Stirnradschaltgetriebes 50 am Getriebeausgang, also dem Abtriebselement 4 zugewandt.
- Figur 12:: Anordnung der Getriebestufen 51, 52 des Stirnradschaltgetriebes 50 sowohl am Getriebeausgang als auch am Getriebeeingang.
- Figur 13:: Ausführung mit Schaltaktorik für die Momentenübergabe zwischen den Teilgetrieben 51, 52 am Eingang der beiden Teilgetriebe 51, 52 des Stirnradschaltgetriebes 50 und Anbindung eines Motors 3 über ein Reduziergetriebe 30 an der Tretkurbelwelle 15.
- Figur 14:: Ausführung mit Schaltaktorik für die Momentenübergabe zwischen den Teilgetrieben 51, 52 am Eingang der beiden Teilgetriebe 51, 52 des Stirnradschaltgetriebes 50 mit einem Aufbau mit vorgeschalteter Hochtreiberplanetenstufe 40, um das hohe Eingangsdrehmoment des Fahrers zu reduzieren.
- Figur 15:: Direkte Verbindung der Tretkurbelwelle mit dem Kettenblatt als Abtriebselement 4 über einen Freilauf 4-3 und mit Direktgang 4-4.
- Figur 16:: Ausführung der Schaltaktorik für die Momentenübergabe zwischen den Teilgetrieben 51, 52 mit zwei Reibkupplungen 23 am Eingang der beiden Teilgetriebe 51, 52 des Stirnradschaltgetriebes 50 und mit koaxialer Anordnung der 23 Reibkupplungen zur Tretkurbelwelle 15 und ohne Anbindung über ein Planetengetriebe.

## Patentansprüche

1. Antriebsanordnung (80) für ein mit Muskelkraft und/oder mit Motorkraft antreibbares Fahrzeug (1), ein Elektrofahrrad, eBike oder Pedelec, mit:
- einer um eine Drehachse (Y) drehbaren Kurbelwelle (15) zum Aufnehmen eines ersten und insbesondere mit Muskelkraft erzeugten Drehmomentes und
- einer Übertragungseinrichtung (20), welche zum Übertragen des ersten Drehmomentes von der Kurbelwelle (15) an ein mit einem Antriebsrad (9-2) des Fahrzeuges (1) koppelbares Abtriebselement (4) und mittels eines mehrstufigen - insbesondere automatisch - schaltbaren Stirnradgetriebes (50) zu einer variablen Übersetzung ausgebildet ist, bei welcher:
- das Stirnradgetriebe (50) ein erstes Stirnradschaltgetriebe (51) und ein davon getrenntes zweites Stirnradschaltgetriebe (52) aufweist,
- das erste Stirnradschaltgetriebe (51) und das zweite Stirnradschaltgetriebe (52) einen gemeinsamen Getriebeausgang zum koppelbaren Abtriebselement (4) aufweisen und
- das erste Stirnradschaltgetriebe (51) und das zweite Stirnradschaltgetriebe (52) wechselseitig und alternativ in den Leistungs- und Drehmomentenfluss der Übertragungseinrichtung (20) koppelbar sind, wobei
• zum wechselseitigen und alternativen Koppeln des ersten Stirnradschaltgetriebes (51) und des zweiten Stirnradschaltgetriebes (52) in den Leistungs- und Drehmomentenfluss der Übertragungseinrichtung (20) eine erste Koppeleinrichtung (21) dem ersten Stirnradschaltgetriebe (51) zugeordnet und eine zweite Koppeleinrichtung (22) dem zweiten Stirnradschaltgetriebe (52) zugeordnet ist, und
• die erste Koppeleinrichtung (21) und die zweite Koppeleinrichtung (22) unabhängig voneinander betätigbar und zumindest in einen gekoppelten Zustand und einen entkoppelten Zustand versetzbar sind,
• wobei im gekoppelten Zustand einer jeweiligen Koppeleinrichtung (21, 22) das jeweils zugeordnete Stirnradschaltgetriebe (51, 52) in den Leistungs- und Drehmomentenfluss der Übertragungseinrichtung (20) eingekoppelt und im entkoppelten Zustand der jeweiligen Koppeleinrichtung (21, 22) das jeweils zugeordnete Stirnradschaltgetriebe (51, 52) vom Leistungs- und Drehmomentenfluss der Übertragungseinrichtung (20) entkoppelt ist,
**dadurch gekennzeichnet, dass**
eine jeweilige Koppeleinrichtung (21, 22)
- ein Planetengetriebe (70, 71, 72) oder einen Teil (71', 72') eines Planetengetriebes (70) und
- Mittel aufweist, ein Sonnenrad (75-1, 75-2) des jeweiligen Planetengetriebes (70, 71, 72) oder Teils (71', 72') eines Planetengetriebes (70)
- gemäß einem gekoppelten Zustand der Koppeleinrichtung (21, 22) zur Leistungs- und Drehmomentenübertragung drehfest zu sperren, insbesondere in Bezug auf ein Gehäuse (14) der Antriebsanordnung (80), oder
- gemäß einem entkoppelten Zustand der Koppeleinrichtung (21, 22) ohne Leistungs- und Drehmomentenübertragung für ein freies Mitdrehen freizugeben.

2. Antriebsanordnung (80) nach Anspruch 1,
bei welcher eine jeweilige Koppeleinrichtung (21, 22) in Bezug auf den Leistungs- und Drehmomentenfluss der Übertragungseinrichtung (20) in der Übertragungseinrichtung (20)
- eingangsseitig und vom Abtriebselement (4) abgewandt oder
- ausgangsseitig und dem Abtriebselement (4) zugewandt angeordnet ist.

3. Antriebsanordnung (80) nach einem der vorhergehenden Ansprüche, bei welcher
- eine jeweilige Koppeleinrichtung (21, 22) zum gesteuerten Sperren und Freigeben eines Sonnenrads (75-1, 75-2) eines zu Grunde liegenden Planetengetriebes (70, 71, 72) ein mit dem jeweiligen Sonnenrad (75-1, 75-2) drehfest gekoppeltes Mitnehmerelement (64) aufweist und
- das jeweilige Mitnehmerelement (64) insbesondere radial und/oder axial außerhalb des jeweils gekoppelten Sonnenrades (75-1, 75-2) angeordnet und/oder jeweils an einem oder als ein radial außen liegender oder äußerster Abschnitt eines mit dem jeweiligen Sonnenrad (75-1, 75-2) drehfest gekoppelten Schaltfingers (61) ausgebildet ist.

4. Antriebsanordnung (80) nach Anspruch 3,
bei welchem ein Sperren und Freigeben eines jeweiligen Sonnenrads (75-1, 75-2) über einen Stellantrieb (60) durchführbar ist, insbesondere mittels einer in Bezug auf die Drehachse (Y) der Kurbelwelle (15) und/oder der Sonnenräder (75-1, 75-2) radial beabstandeten und gesteuert achsenparallel positionierbaren Schaltkulisse (66) mit einer Mehrzahl von Anschlagselementen (68) zum Sperren und Freigeben der Mitnehmerelemente (64).

5. Antriebsanordnung (80) nach einem der vorhergehenden Ansprüche, bei welcher eine jeweilige Koppeleinrichtung (21, 22) eine Kupplung (23, 24) aufweist oder als solche ausgebildet ist, insbesondere nach Art einer Reibkupplung (23) oder einer Bremse (24), und/oder im Zusammenwirken mit einem Aktuator (25) zur gesteuerten Betätigung der jeweiligen Kupplung (23, 24), insbesondere zum Sperren oder Freigeben eines jeweiligen Sonnenrads (75-1, 75-2) eines zu Grunde liegenden Planetengetriebes (70, 71, 72).

6. Antriebsanordnung (80) nach einem der vorangehenden Ansprüche, bei welcher
- ein elektrischer Antrieb (3) zum Erzeugen eines Motordrehmoments ausgebildet ist und
- der elektrische Antrieb (3) zum Übertragen des Motordrehmomentes über die Übertragungseinrichtung (20) und insbesondere über das Stirnradgetriebe (50) steuerbar an das Abtriebselement (4) koppelbar ist.

7. Antriebsanordnung (80) nach Anspruch 6,
bei welcher zwischen dem elektrischen Antrieb (3) und dem Stirnradgetriebe (50) ein Motorreduziergetriebe (30) in Form eines mehrstufigen Stirnradgetriebes (32-35), insbesondere mit oder aus Kunststoffmaterial ausgebildet ist.

8. Antriebsanordnung (80) nach einem Anspruch 6 oder 7,
welche den Aufbau eines Mittelmotorantriebs und insbesondere ein gemeinsames Gehäuse (14) aufweist, in welchem die Übertragungseinrichtung (20), das Stirnradgetriebe (50) und insbesondere die ersten und zweiten Stirnradschaltgetriebe (51, 52), die ersten und zweiten Koppeleinrichtungen (21, 22), gegebenenfalls der Stellantrieb (60), der elektrische Antrieb (3), das Motorreduziergetriebe (30) und - zumindest teilweise - die Kurbelwelle (15) aufgenommen sind.

9. Mit Muskelkraft und/oder mit Motorkraft antreibbares Fahrzeug (1), Elektrofahrrad, eBike oder Pedelec, mit:
- mindestens einem Rad (9-1, 9-2) und
- einer Antriebsanordnung (80) nach einem der Ansprüche 1 bis 8 zum Antreiben des mindestens einen Rades (9-1, 9-2).

## Claims

1. Drive arrangement (80) for a vehicle (1) that can be driven by muscle power and/or by motor power, an electric bicycle, e-bike or pedelec, having:
- a crankshaft (15) which is rotatable about an axis of rotation (Y) and which serves for receiving a first torque, generated in particular by muscle power, and
- a transfer device (20) which is designed for transferring the first torque from the crankshaft (15) to an output element (4) which is couplable to a drive wheel (9-2) of the vehicle (1) and, by means of a multi-stage - in particular automatically - shiftable spur-gear gearing (50), for a variable transmission ratio,
in which drive arrangement:
- the spur-gear gearing (50) has a first spur-gear shift gearing (51) and, separate therefrom, a second spur-gear shift gearing (52),
- the first spur-gear shift gearing (51) and the second spur-gear shift gearing (52) have a common gearing output to the couplable output element (4), and
- the first spur-gear shift gearing (51) and the second spur-gear shift gearing (52) are couplable reciprocally and alternatively into the power and torque flow of the transfer device (20), wherein
• for reciprocal and alternative coupling of the first spur-gear shift gearing (51) and of the second spur-gear shift gearing (52) to the power and torque flow of the transfer device (20), a first coupling device (21) is assigned to the first spur-gear shift gearing (51), and a second coupling device (22) is assigned to the second spur-gear shift gearing (52), and
• the first coupling device (21) and the second coupling device (22) can be actuated independently of one another and can be set at least into a coupled state and into a decoupled state,
• wherein, in the coupled state of a respective coupling device (21, 22), the respectively assigned spur-gear shift gearing (51, 52) is coupled into the power and torque flow of the transfer device (20) and, in the decoupled state of the respective coupling device (21, 22), the respectively assigned spur-gear shift gearing (51, 52) is decoupled from the power and torque flow of the transfer device (20), **characterized in that**
a respective coupling device (21, 22) has
- a planetary gearing (70, 71, 72) or a part (71', 72') of a planetary gearing (70), and
- means so that a sun gear (75-1, 75-2) of the respective planetary gearing (70, 71, 72) or part (71', 72') of a planetary gearing (70),
- according to a coupled state of the coupling device (21, 22), for power and torque transfer, can be locked in a rotationally fixed manner, in particular with respect to a housing (14) of the drive arrangement (80), or,
- according to a decoupled state of the coupling device (21, 22), without power and torque transfer, can be released for free conjoint rotation.

2. Drive arrangement (80) according to Claim 1, in which, with respect to the power and torque flow of the transfer device (20), a respective coupling device (21, 22) is arranged in the transfer device (20)
- on the input side and faced away from the output element (4), or
- on the output side and facing the output element (4) .

3. Drive arrangement (80) according to either of the preceding claims, in which,
- for controlled locking and release of a sun gear (75-1, 75-2) of an underlying planetary gearing (70, 71, 72), a respective coupling device (21, 22) has a driver element (64) coupled to the respective sun gear (75-1, 75-2) for conjoint rotation, and
- the respective driver element (64) is arranged, in particular radially and/or axially, outside of the respectively coupled sun gear (75-1, 75-2) and/or is formed in each case on a portion, or as a radially outer or outermost portion, of a shift finger (61) coupled to the respective sun gear (75-1, 75-2) for conjoint rotation.

4. Drive arrangement (80) according to Claim 3,
in which locking and release of a respective sun gear (75-1, 75-2) can be carried out by way of an actuating drive (60), in particular by means of a shift link motion (66) which is radially spaced apart, and can be positioned axially parallel in a controlled manner, with respect to the axis of rotation (Y) of the crankshaft (15) and/or of the sun gears (75-1, 75-2) and which has a plurality of stop elements (68) for locking and releasing the driver elements (64).

5. Drive arrangement (80) according to one of the preceding claims, in which a respective coupling device (21, 22) has a clutch (23, 24) or is formed as such, in particular in the manner of a friction clutch (23) or of a brake (24), and/or in interaction with an actuator (25) for controlled actuation of the respective clutch (23, 24), in particular for locking or releasing a respective sun gear (75-1, 75-2) of an underlying planetary gearing (70, 71, 72).

6. Drive arrangement (80) according to one of the preceding claims, in which
- an electric drive (3) is designed to generate a motor torque, and
- the electric drive (3) is couplable to the output element (4) in a controllable manner for transferring the motor torque via the transfer device (20) and in particular via the spur-gear gearing (50).

7. Drive arrangement (80) according to Claim 6,
in which a motor reduction gearing (30) in the form of a multi-stage spur-gear gearing (32-35), in particular containing or consisting of plastics material, is formed between the electric drive (3) and the spur-gear gearing (50).

8. Drive arrangement (80) according to Claim 6 or 7, which has a mid-motor drive design and in particular a common housing (14) in which there are accommodated the transfer device (20), the spur-gear gearing (50) and in particular the first and second spur-gear shift gearings (51, 52), the first and second coupling devices (21, 22), where appropriate the actuating drive (60), the electric drive (3), the motor reduction gearing (30) and - at least in part - the crankshaft (15).

9. Vehicle (1) that can be driven by muscle power and/or by motor power, electric bicycle, e-bike or pedelec, having:
- at least one wheel (9-1, 9-2), and
- a drive arrangement (80) according to one of Claims 1 to 8 for driving the at least one wheel (9-1, 9-2).

## Revendications

1. Agencement d'entraînement (80) pour un véhicule (1) pouvant être entraîné par une force musculaire et/ou par une force de moteur, un vélo électrique, un vélo à assistance électrique ou un pédélec, comportant :
- un vilebrequin (15) pouvant tourner autour d'un axe de rotation (Y) pour recevoir un premier couple produit en particulier par une force musculaire et
- un dispositif de transmission (20), lequel est réalisé de manière à transmettre le premier couple du vilebrequin (15) à un élément de sortie (4) pouvant être accouplé à une roue d'entraînement (9-2) du véhicule (1) et au moyen d'un engrenage à pignons droits (50) à plusieurs étages, commutable, en particulier automatiquement, en vue d'une transmission variable, dans lequel :
- l'engrenage à pignons droits (50) comprend un premier engrenage commutable à pignons droits (51) et un deuxième engrenage commutable à pignons droits (52) séparé de celui-ci,
- le premier engrenage commutable à pignons droits (51) et le deuxième engrenage commutable à pignons droits (52) comprennent une sortie d'engrenage commune vers l'élément de sortie (4) pouvant être accouplé et
- le premier engrenage commutable à pignons droits (51) et le deuxième engrenage commutable à pignons droits (52) peuvent être accouplés en alternance et en variante dans le flux de puissance et de couple du dispositif de transmission (20),
• pour l'accouplement en alternance et en variante du premier engrenage commutable à pignons droits (51) et du deuxième engrenage commutable à pignons droits (52) dans le flux de puissance et de couple du dispositif de transmission (20), un premier dispositif d'accouplement (21) étant associé au premier engrenage commutable à pignons droits (51) et un deuxième dispositif d'accouplement (22) étant associé au deuxième engrenage commutable à pignons droits (52), et
• le premier dispositif d'accouplement (21) et le deuxième dispositif d'accouplement (22) pouvant être actionnés indépendamment l'un de l'autre et pouvant être amenés au moins à un état accouplé et à un état désaccouplé,
• dans l'état accouplé d'un dispositif d'accouplement (21, 22) respectif, l'engrenage commutable à pignons droits (51, 52) associé respectivement étant accouplé dans le flux de puissance et de couple du dispositif de transmission (20) et dans l'état désaccouplé du dispositif d'accouplement (21, 22) respectif, l'engrenage commutable à pignons droits (51, 52) associé respectivement étant désaccouplé du flux de puissance et de couple du dispositif de transmission (20), **caractérisé en ce**
**qu'**un dispositif d'accouplement (21, 22) respectif
- comprend un engrenage planétaire (70, 71, 72) ou une partie (71', 72') d'un engrenage planétaire (70) et
- des moyens
- pour bloquer de manière non rotative un pignon planétaire (75-1, 75-2) de l'engrenage planétaire (70, 71, 72) respectif ou d'une partie (71', 72') d'un engrenage planétaire (70), en particulier par rapport à un carter (14) de l'agencement d'entraînement (80), pour la transmission de puissance et de couple, conformément à un état accouplé du dispositif d'accouplement (21, 22), ou
- pour libérer ce pignon planétaire pour une rotation conjointe libre sans transmission de puissance ni de couple, conformément à un état désaccouplé du dispositif d'accouplement (21, 22).

2. Agencement d'entraînement (80) selon la revendication 1,
dans lequel un dispositif d'accouplement (21, 22) respectif est disposé, par rapport au flux de puissance et de couple du dispositif de transmission (20), dans le dispositif de transmission (20)
- du côté de l'entrée et de manière opposée à l'élément de sortie (4) ou
- du côté de la sortie et de manière tournée vers l'élément de sortie (4).

3. Agencement d'entraînement (80) selon l'une des revendications précédentes, dans lequel
- un dispositif d'accouplement (21, 22) respectif comprend, pour le blocage et la libération commandés d'un pignon planétaire (75-1, 75-2) d'un engrenage planétaire (70, 71, 72) sous-jacent, un élément d'entraînement (64) accouplé de manière solidaire en rotation au pignon planétaire (75-1, 75-2) respectif et
- l'élément d'entraînement (64) respectif est disposé en particulier radialement et/ou axialement à l'extérieur du pignon planétaire (75-1, 75-2) accouplé respectivement et/ou est réalisé respectivement sur une partie, ou comme une partie située radialement à l'extérieur ou la plus à l'extérieur, d'un doigt de changement de vitesses (61) accouplé de manière solidaire en rotation au pignon planétaire (75-1, 75-2) respectif.

4. Agencement d'entraînement (80) selon la revendication 3,
dans lequel un blocage et une libération d'un pignon planétaire (75-1, 75-2) respectif peuvent être effectués par le biais d'un entraînement de réglage (60), en particulier au moyen d'une coulisse de changement de vitesses (66) espacée radialement par rapport à l'axe de rotation (Y) du vilebrequin (15) et/ou des pignons planétaires (75-1, 75-2) et pouvant être positionnée de manière commandée axialement parallèlement, laquelle est dotée d'une pluralité d'éléments de butée (68) pour le blocage et la libération des éléments d'entraînement (64).

5. Agencement d'entraînement (80) selon l'une des revendications précédentes,
dans lequel un dispositif d'accouplement (21, 22) respectif comprend un embrayage (23, 24) ou est réalisé en tant que tel, en particulier à la manière d'un embrayage à friction (23) ou d'un frein (24), et/ou en coopération avec un actionneur (25) pour l'actionnement commandé de l'embrayage (23, 24) respectif, en particulier pour le blocage ou la libération d'un pignon planétaire (75-1, 75-2) respectif d'un engrenage planétaire (70, 71, 72) sous-jacent.

6. Agencement d'entraînement (80) selon l'une des revendications précédentes, dans lequel
- un entraînement électrique (3) est réalisé pour produire un couple de moteur et
- l'entraînement électrique (3) peut être accouplé à l'élément de sortie (4) de manière commandable par le biais du dispositif de transmission (20) et en particulier par le biais de l'engrenage à pignons droits (50) pour la transmission du couple de moteur.

7. Agencement d'entraînement (80) selon la revendication 6,
dans lequel un moto-réducteur (30) est réalisé sous la forme d'un engrenage à pignons droits à plusieurs étages (32-35), en particulier doté ou constitué de matière synthétique, entre l'entraînement électrique (3) et l'engrenage à pignons droits (50).

8. Agencement d'entraînement (80) selon l'une des revendications 6 ou 7,
lequel présente la configuration d'un entraînement à moteur central et en particulier un carter (14) commun, dans lequel le dispositif de transmission (20), l'engrenage à pignons droits (50) et en particulier le premier et le deuxième engrenage commutable à pignons droits (51, 52), les premier et deuxième dispositifs d'accouplement (21, 22), éventuellement l'entraînement de réglage (60), l'entraînement électrique (3), le moto-réducteur (30) et, au moins partiellement, le vilebrequin (15) sont logés.

9. Véhicule (1) pouvant être entraîné par une force musculaire et/ou par une force de moteur, vélo électrique, vélo à assistance électrique ou pédélec, comportant :
- au moins une roue (9-1, 9-2) et
- un agencement d'entraînement (80) selon l'une des revendications 1 à 8 pour l'entraînement de l'au moins une roue (9-1, 9-2).
